(19) Europäisches Patentamt
European Patent Office
Office européen des brevets

(11) **EP 4 668 741 A1**

(12) **EUROPEAN PATENT APPLICATION**

(43) Date of publication:
**24.12.2025  Bulletin 2025/52**

(21) Application number: **24305963.1**

(22) Date of filing: **19.06.2024**

(51) International Patent Classification (IPC):
***H04N 19/124*** (2014.01)   ***H04N 19/147*** (2014.01)
***H04N 19/176*** (2014.01)

(52) Cooperative Patent Classification (CPC):
**H04N 19/124; H04N 19/147; H04N 19/176**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **BALCILAR, Muhammet**
**35830 BETTON (FR)**

• **NASER, Karam**
**35250 MOUAZE (FR)**
• **CHEN, Ya**
**35700 RENNES (FR)**
• **LE LEANNEC, Fabrice**
**35830 BETTON (FR)**
• **GALPIN, Franck**
**35235 THORIGNE-FOUILLARD (FR)**

(74) Representative: **Vossius & Partner**
**Patentanwälte Rechtsanwälte mbB**
**Siebertstraße 3**
**81675 München (DE)**

(54)  **ENHANCED STATES DEPENDENT QUANTIZATION**

(57)    Systems, methods, and instrumentalities may be provided for enhanced states dependent quantization. In examples, a device (e.g., a video encoding device) may determine to use a quantization state transition table for trellis coded quantization (TCQ) comprising a plurality of quantization states and a dummy state. The device may determine that the quantization state transition table comprises more than eight states. The device may select a quantization state from the plurality of quantization states. The device may determine, based on the selected quantization state, a dequantization index based on a parity associated with the selected quantization state. The dummy state may be associated with the selected quantization state. The device may perform quantization based on the selected quantization state.

FIG. 9

# EP 4 668 741 A1

## Description

### BACKGROUND

Video coding systems can be used to compress digital video signals, e.g., to reduce the storage and/or transmission bandwidth needed for such signals. Video coding systems can include, for example, block-based, wavelet-based, and/or object-based systems.

### SUMMARY

Systems, methods, and instrumentalities may be provided for enhanced states dependent quantization. In examples, a device (e.g., a video encoding device) may determine to use a quantization state transition table for trellis coded quantization (TCQ) comprising a plurality of quantization states and a dummy state. The device may determine that the quantization state transition table comprises more than eight states. The device may select a quantization state from the plurality of quantization states. The device may determine, based on the selected quantization state, a dequantization index based on a parity associated with the selected quantization state. The dummy state may be associated with the selected quantization state. The device may perform quantization based on the selected quantization state.

The device may determine that the state transition table includes nine states. The nine states may include eight quantization states and the dummy state.

Multiple dequantization indices may be associated with the multiple quantization states. The device may determine the quantization index from the multiple quantization indices based on the selected quantization state. The device may include an indication of the quantization index in video data.

Odd indices from the multiple quantization indices may be associated with a first scalar quantizer. Even indices from the multiple quantization indices may be associated with a second scalar quantizer. The device may determine that the dummy state is associated with the first scalar quantizer or the second scalar quantizer.

The device may determine to use the state transition table for TCQ at one or more of a block level, slice level, or picture level. The device may determine a plurality of rate distortion costs of the multiple quantization states. The device may select the quantization state from the plurality of quantization states based on the plurality of rate distortion costs.

Systems, methods, and instrumentalities described herein can involve a decoder. In some examples, the systems, methods, and instrumentalities described herein can involve an encoder. In some examples, the systems, methods, and instrumentalities described herein can involve a signal (e.g., from an encoder and/or received by a decoder). A computer-readable medium can include instructions for causing one or more processors to perform methods described herein. A computer program product can include instructions which, when the program is executed by one or more processors, can cause the one or more processors to carry out the methods described herein.

### BRIEF DESCRIPTION OF THE DRAWINGS

FIG. 1A is a system diagram illustrating an example communications system in which one or more disclosed embodiments can be implemented.

FIG. 1B is a system diagram illustrating an example wireless transmit/receive unit (WTRU) that can be used within the communications system illustrated in FIG. 1A according to an embodiment.

FIG. 1C is a system diagram illustrating an example radio access network (RAN) and an example core network (CN) that can be used within the communications system illustrated in FIG. 1A according to an embodiment.

FIG. 1D is a system diagram illustrating a further example RAN and a further example CN that can be used within the communications system illustrated in FIG. 1A according to an embodiment.

FIG. 2 illustrates an example video encoder.

FIG. 3 illustrates an example video decoder.

FIG. 4 illustrates an example of a a system in which various aspects and examples can be implemented.

FIG. 5 illustrates examples of two scalar quantizers that may be used.

FIG. 6 illustrates an example 4-state based quantizer selection process.

FIG. 7 illustrates an example trellis graph for minimizing rate-distortion cost.

FIG. 8 illustrates an example trellis graph for determining the quantization indexes.

FIG. 9 illustrates an example inverse quantization using S states.

## DETAILED DESCRIPTION

A more detailed understanding can be had from the following description, given by way of example in conjunction with the accompanying drawings.

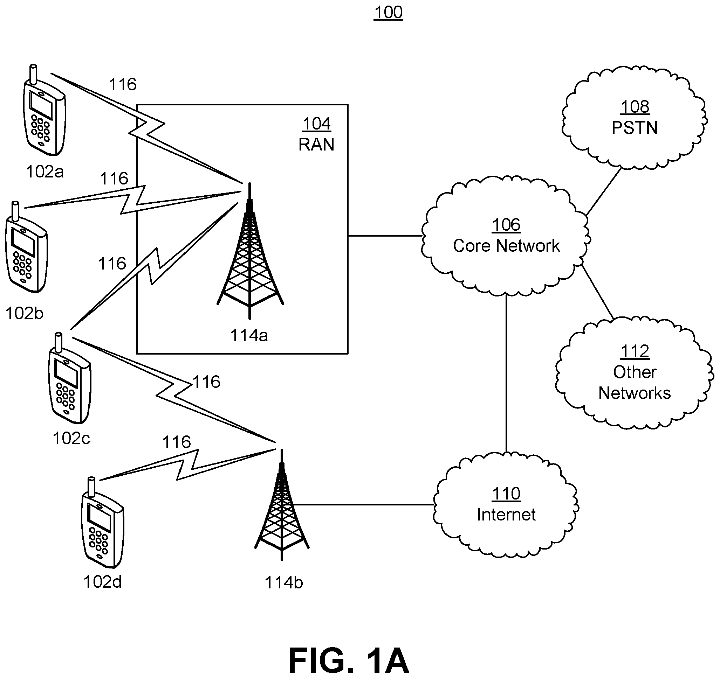

FIG. 1A is a diagram illustrating an example communications system 100 in which one or more disclosed embodiments can be implemented. The communications system 100 can be a multiple access system that provides content, such as voice, data, video, messaging, broadcast, etc., to multiple wireless users. The communications system 100 can enable multiple wireless users to access such content through the sharing of system resources, including wireless bandwidth. For example, the communications systems 100 can employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 can include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d can be any type of device configured to operate and/or communicate in a wireless environment. By way of example, the WTRUs 102a, 102b, 102c, 102d, any of which can be referred to as a "station" and/or a "STA", can be configured to transmit and/or receive wireless signals and can include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d can be interchangeably referred to as a UE.

The communications systems 100 can also include a base station 114a and/or a base station 114b. Each of the base stations 114a, 114b can be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b can be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b can include any number of interconnected base stations and/or network elements.

The base station 114a can be part of the RAN 104/113, which can also include other base stations and/or network elements (not shown), such as a base station controller (BSC), a radio network controller (RNC), relay nodes, etc. The base station 114a and/or the base station 114b can be configured to transmit and/or receive wireless signals on one or more carrier frequencies, which can be referred to as a cell (not shown). These frequencies can be in licensed spectrum, unlicensed spectrum, or a combination of licensed and unlicensed spectrum. A cell can provide coverage for a wireless service to a specific geographical area that can be relatively fixed or that can change over time. The cell can further be divided into cell sectors. For example, the cell associated with the base station 114a can be divided into three sectors. Thus, in one embodiment, the base station 114a can include three transceivers, i.e., one for each sector of the cell. In an embodiment, the base station 114a can employ multiple-input multiple output (MIMO) technology and can utilize multiple transceivers for each sector of the cell. For example, beamforming can be used to transmit and/or receive signals in desired spatial directions.

The base stations 114a, 114b can communicate with one or more of the WTRUs 102a, 102b, 102c, 102d over an air interface 116, which can be any suitable wireless communication link (e.g., radio frequency (RF), microwave, centimeter wave, micrometer wave, infrared (IR), ultraviolet (UV), visible light, etc.). The air interface 116 can be established using any suitable radio access technology (RAT).

More specifically, as noted above, the communications system 100 can be a multiple access system and can employ one or more channel access schemes, such as CDMA, TDMA, FDMA, OFDMA, SC-FDMA, and the like. For example, the base station 114a in the RAN 104/113 and the WTRUs 102a, 102b, 102c can implement a radio technology such as Universal Mobile Telecommunications System (UMTS) Terrestrial Radio Access (UTRA), which can establish the air interface 115/116/117 using wideband CDMA (WCDMA). WCDMA can include communication protocols such as High-Speed Packet Access (HSPA) and/or Evolved HSPA (HSPA+). HSPA can include High-Speed Downlink (DL) Packet Access (HSDPA) and/or High-Speed UL Packet Access (HSUPA).

In an embodiment, the base station 114a and the WTRUs 102a, 102b, 102c can implement a radio technology such as Evolved UMTS Terrestrial Radio Access (E-UTRA), which can establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c can implement a radio technology such as NR Radio Access, which can establish the air interface 116 using New Radio (NR).

In an embodiment, the base station 114a and the WTRUs 102a, 102b, 102c can implement multiple radio access technologies. For example, the base station 114a and the WTRUs 102a, 102b, 102c can implement LTE radio access and NR radio access together, for instance using dual connectivity (DC) principles. Thus, the air interface utilized by WTRUs 102a, 102b, 102c can be characterized by multiple types of radio access technologies and/or transmissions sent to/from multiple types of base stations (e.g., an eNB and a gNB).

In other embodiments, the base station 114a and the WTRUs 102a, 102b, 102c can implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A can be a wireless router, Home Node B, Home eNode B, or access point, for example, and can utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d can implement a radio technology such as IEEE 802.11 to establish a wireless local area network (WLAN). In an embodiment, the base station 114b and the WTRUs 102c, 102d can implement a radio technology such as IEEE 802.15 to establish a wireless personal area network (WPAN). In yet another embodiment, the base station 114b and the WTRUs 102c, 102d can utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b can have a direct connection to the Internet 110. Thus, the base station 114b may not be required to access the Internet 110 via the CN 106/115.

The RAN 104/113 can be in communication with the CN 106/115, which can be any type of network configured to provide voice, data, applications, and/or voice over internet protocol (VoIP) services to one or more of the WTRUs 102a, 102b, 102c, 102d. The data can have varying quality of service (QoS) requirements, such as differing throughput requirements, latency requirements, error tolerance requirements, reliability requirements, data throughput requirements, mobility requirements, and the like. The CN 106/115 can provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 can be in direct or indirect communication with other RANs that employ the same RAT as the RAN 104/113 or a different RAT. For example, in addition to being connected to the RAN 104/113, which can be utilizing a NR radio technology, the CN 106/115 can also be in communication with another RAN (not shown) employing a GSM, UMTS, CDMA 2000, WiMAX, E-UTRA, or WiFi radio technology.

The CN 106/115 can also serve as a gateway for the WTRUs 102a, 102b, 102c, 102d to access the PSTN 108, the Internet 110, and/or the other networks 112. The PSTN 108 can include circuit-switched telephone networks that provide plain old telephone service (POTS). The Internet 110 can include a global system of interconnected computer networks and devices that use common communication protocols, such as the transmission control protocol (TCP), user datagram protocol (UDP) and/or the internet protocol (IP) in the TCP/IP internet protocol suite. The networks 112 can include wired and/or wireless communications networks owned and/or operated by other service providers. For example, the networks 112 can include another CN connected to one or more RANs, which can employ the same RAT as the RAN 104/113 or a different RAT.

Some or all of the WTRUs 102a, 102b, 102c, 102d in the communications system 100 can include multi-mode capabilities (e.g., the WTRUs 102a, 102b, 102c, 102d can include multiple transceivers for communicating with different wireless networks over different wireless links). For example, the WTRU 102c shown in FIG. 1A can be configured to communicate with the base station 114a, which can employ a cellular-based radio technology, and with the base station 114b, which can employ an IEEE 802 radio technology.

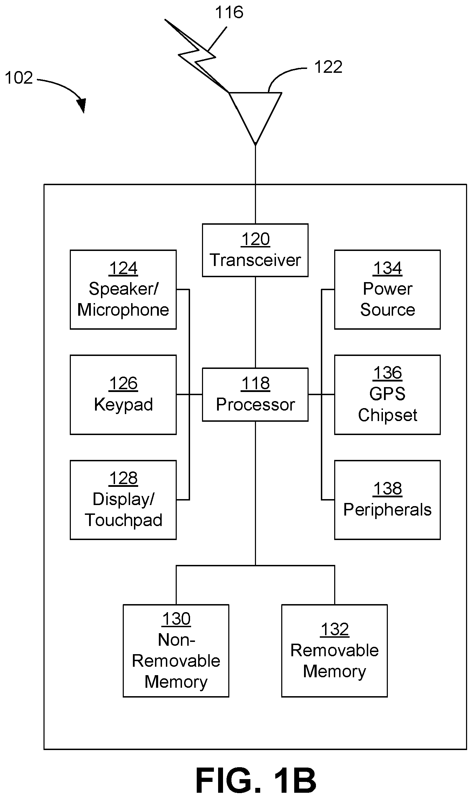

FIG. 1B is a system diagram illustrating an example WTRU 102. As shown in FIG. 1B, the WTRU 102 can include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 can include any sub-combination of the foregoing elements while remaining consistent with an embodiment.

The processor 118 can be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 can perform signal coding, data processing, power control, input/output processing, and/or any other functionality that enables the WTRU 102 to operate in a wireless environment. The processor 118 can be coupled to the transceiver 120, which can be coupled to the transmit/receive element 122. While FIG. 1B depicts the processor 118 and the transceiver 120 as separate components, it will be appreciated that the processor 118 and the transceiver 120 can be integrated together in an electronic package or chip.

The transmit/receive element 122 can be configured to transmit signals to, or receive signals from, a base station (e.g., the base station 114a) over the air interface 116. For example, in one embodiment, the transmit/receive element 122 can be an antenna configured to transmit and/or receive RF signals. In an embodiment, the transmit/receive element 122 can be an emitter/detector configured to transmit and/or receive IR, UV, or visible light signals, for example. In yet another embodiment, the transmit/receive element 122 can be configured to transmit and/or receive both RF and light signals. It will be appreciated that the transmit/receive element 122 can be configured to transmit and/or receive any combination of wireless signals.

Although the transmit/receive element 122 is depicted in FIG. 1B as a single element, the WTRU 102 can include any number of transmit/receive elements 122. More specifically, the WTRU 102 can employ MIMO technology. Thus, in one embodiment, the WTRU 102 can include two or more transmit/receive elements 122 (e.g., multiple antennas) for transmitting and receiving wireless signals over the air interface 116.

The transceiver 120 can be configured to modulate the signals that are to be transmitted by the transmit/receive element 122 and to demodulate the signals that are received by the transmit/receive element 122. As noted above, the WTRU 102 can have multi-mode capabilities. Thus, the transceiver 120 can include multiple transceivers for enabling the WTRU 102 to communicate via multiple RATs, such as NR and IEEE 802.11, for example.

The processor 118 of the WTRU 102 can be coupled to, and can receive user input data from, the speaker/microphone 124, the keypad 126, and/or the display/touchpad 128 (e.g., a liquid crystal display (LCD) display unit or organic light-emitting diode (OLED) display unit). The processor 118 can also output user data to the speaker/microphone 124, the keypad 126, and/or the display/touchpad 128. In addition, the processor 118 can access information from, and store data in, any type of suitable memory, such as the non-removable memory 130 and/or the removable memory 132. The non-removable memory 130 can include random-access memory (RAM), read-only memory (ROM), a hard disk, or any other type of memory storage device. The removable memory 132 can include a subscriber identity module (SIM) card, a memory stick, a secure digital (SD) memory card, and the like. In other embodiments, the processor 118 can access information from, and store data in, memory that is not physically located on the WTRU 102, such as on a server or a home computer (not shown).

The processor 118 can receive power from the power source 134 and can be configured to distribute and/or control the power to the other components in the WTRU 102. The power source 134 can be any suitable device for powering the WTRU 102. For example, the power source 134 can include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 can also be coupled to the GPS chipset 136, which can be configured to provide location information (e.g., longitude and latitude) regarding the current location of the WTRU 102. In addition to, or in lieu of, the information from the GPS chipset 136, the WTRU 102 can receive location information over the air interface 116 from a base station (e.g., base stations 114a, 114b) and/or determine its location based on the timing of the signals being received from two or more nearby base stations. It will be appreciated that the WTRU 102 can acquire location information by way of any suitable location-determination method while remaining consistent with an embodiment.

The processor 118 can further be coupled to other peripherals 138, which can include one or more software and/or hardware modules that provide additional features, functionality and/or wired or wireless connectivity. For example, the peripherals 138 can include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 can include one or more sensors, the sensors can be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 can include a full duplex radio for which transmission and reception of some or all of the signals (e.g., associated with particular subframes for both the UL (e.g., for transmission) and downlink (e.g., for reception) can be concurrent and/or simultaneous. The full duplex radio can include an interference management unit to reduce and or substantially eliminate self-interference via either hardware (e.g., a choke) or signal processing via a processor (e.g., a separate processor (not shown) or via processor 118). In an embodiment, the WRTU 102 can include a half-duplex radio for which transmission and reception of some or all of the signals (e.g., associated with particular subframes for either the UL (e.g., for transmission) or the downlink (e.g., for reception)).

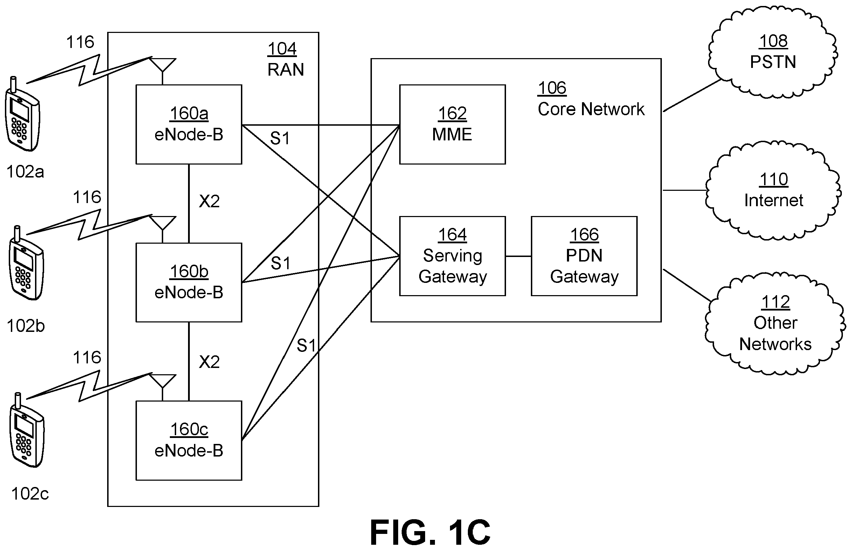

FIG. 1C is a system diagram illustrating the RAN 104 and the CN 106 according to an embodiment. As noted above, the RAN 104 can employ an E-UTRA radio technology to communicate with the WTRUs 102a, 102b, 102c over the air interface 116. The RAN 104 can also be in communication with the CN 106.

The RAN 104 can include eNode-Bs 160a, 160b, 160c, though it will be appreciated that the RAN 104 can include any number of eNode-Bs while remaining consistent with an embodiment. The eNode-Bs 160a, 160b, 160c can each include one or more transceivers for communicating with the WTRUs 102a, 102b, 102c over the air interface 116. In one embodiment, the eNode-Bs 160a, 160b, 160c can implement MIMO technology. Thus, the eNode-B 160a, for example, can use multiple antennas to transmit wireless signals to, and/or receive wireless signals from, the WTRU 102a.

Each of the eNode-Bs 160a, 160b, 160c can be associated with a particular cell (not shown) and can be configured to handle radio resource management decisions, handover decisions, scheduling of users in the UL and/or DL, and the like. As shown in FIG. 1C, the eNode-Bs 160a, 160b, 160c can communicate with one another over an X2 interface.

The CN 106 shown in FIG. 1C can include a mobility management entity (MME) 162, a serving gateway (SGW) 164, and a packet data network (PDN) gateway (or PGW) 166. While each of the foregoing elements are depicted as part of the CN 106, it will be appreciated that any of these elements can be owned and/or operated by an entity other than the CN operator.

The MME 162 can be connected to each of the eNode-Bs 162a, 162b, 162c in the RAN 104 via an S1 interface and can serve as a control node. For example, the MME 162 can be responsible for authenticating users of the WTRUs 102a, 102b, 102c, bearer activation/deactivation, selecting a particular serving gateway during an initial attach of the WTRUs 102a, 102b, 102c, and the like. The MME 162 can provide a control plane function for switching between the RAN 104 and other RANs (not shown) that employ other radio technologies, such as GSM and/or WCDMA.

The SGW 164 can be connected to each of the eNode Bs 160a, 160b, 160c in the RAN 104 via the S1 interface. The SGW 164 can generally route and forward user data packets to/from the WTRUs 102a, 102b, 102c. The SGW 164 can perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 can be connected to the PGW 166, which can provide the WTRUs 102a, 102b, 102c with access to packet-switched networks, such as the Internet 110, to facilitate communications between the WTRUs 102a, 102b, 102c and IP-enabled devices.

The CN 106 can facilitate communications with other networks. For example, the CN 106 can provide the WTRUs 102a, 102b, 102c with access to circuit-switched networks, such as the PSTN 108, to facilitate communications between the WTRUs 102a, 102b, 102c and traditional land-line communications devices. For example, the CN 106 can include, or can communicate with, an IP gateway (e.g., an IP multimedia subsystem (IMS) server) that serves as an interface between the CN 106 and the PSTN 108. In addition, the CN 106 can provide the WTRUs 102a, 102b, 102c with access to the other networks 112, which can include other wired and/or wireless networks that are owned and/or operated by other service providers.

Although the WTRU is described in FIGS. 1A-1D as a wireless terminal, it is contemplated that in certain representative embodiments that such a terminal can use (e.g., temporarily or permanently) wired communication interfaces with the communication network.

In representative embodiments, the other network 112 can be a WLAN.

A WLAN in Infrastructure Basic Service Set (BSS) mode can have an Access Point (AP) for the BSS and one or more stations (STAs) associated with the AP. The AP can have an access or an interface to a Distribution System (DS) or another type of wired/wireless network that carries traffic in to and/or out of the BSS. Traffic to STAs that originates from outside the BSS can arrive through the AP and can be delivered to the STAs. Traffic originating from STAs to destinations outside the BSS can be sent to the AP to be delivered to respective destinations. Traffic between STAs within the BSS can be sent through the AP, for example, where the source STA can send traffic to the AP and the AP can deliver the traffic to the destination STA. The traffic between STAs within a BSS can be considered and/or referred to as peer-to-peer traffic. The peer-to-peer traffic can be sent between (e.g., directly between) the source and destination STAs with a direct link setup (DLS). In certain representative embodiments, the DLS can use an 802.11e DLS or an 802.11z tunneled DLS (TDLS). A WLAN using an Independent BSS (IBSS) mode may not have an AP, and the STAs (e.g., all of the STAs) within or using the IBSS can communicate directly with each other. The IBSS mode of communication can sometimes be referred to herein as an "ad-hoc" mode of communication.

When using the 802.11ac infrastructure mode of operation or a similar mode of operations, the AP can transmit a beacon on a fixed channel, such as a primary channel. The primary channel can be a fixed width (e.g., 20 MHz wide bandwidth) or a dynamically set width via signaling. The primary channel can be the operating channel of the BSS and can be used by the STAs to establish a connection with the AP. In certain representative embodiments, Carrier Sense Multiple Access with Collision Avoidance (CSMA/CA) can be implemented, for example in in 802.11 systems. For CSMA/CA, the STAs (e.g., every STA), including the AP, can sense the primary channel. If the primary channel is sensed/detected and/or determined to be busy by a particular STA, the particular STA can back off. One STA (e.g., only one station) can transmit at any given time in a given BSS.

High Throughput (HT) STAs can use a 40 MHz wide channel for communication, for example, via a combination of the primary 20 MHz channel with an adjacent or nonadjacent 20 MHz channel to form a 40 MHz wide channel.

Very High Throughput (VHT) STAs can support 20MHz, 40 MHz, 80 MHz, and/or 160 MHz wide channels. The 40 MHz, and/or 80 MHz, channels can be formed by combining contiguous 20 MHz channels. A 160 MHz channel can be formed by combining 8 contiguous 20 MHz channels, or by combining two non-contiguous 80 MHz channels, which can be referred to as an 80+80 configuration. For the 80+80 configuration, the data, after channel encoding, can be passed through a segment parser that can divide the data into two streams. Inverse Fast Fourier Transform (IFFT) processing, and time domain processing, can be done on each stream separately. The streams can be mapped on to the two 80 MHz channels, and the data can be transmitted by a transmitting STA. At the receiver of the receiving STA, the above described operation for the 80+80 configuration can be reversed, and the combined data can be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah can support Meter Type Control/Machine-Type Communications, such as MTC devices in a macro coverage area. MTC devices can have certain capabilities, for example, limited capabilities including support for (e.g., only support for) certain and/or limited bandwidths. The MTC devices can include a battery with a battery life above a threshold (e.g., to maintain a very long battery life).

WLAN systems, which can support multiple channels, and channel bandwidths, such as 802.11n, 802.11ac, 802.11af, and 802.11ah, include a channel which can be designated as the primary channel. The primary channel can have a bandwidth equal to the largest common operating bandwidth supported by all STAs in the BSS. The bandwidth of the primary channel can be set and/or limited by a STA, from among all STAs in operating in a BSS, which supports the smallest bandwidth operating mode. In the example of 802.11ah, the primary channel can be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings can depend on the status of the primary channel. If the primary channel is busy, for example, due to a STA (which supports only a 1 MHz operating mode), transmitting to the AP, the entire available frequency bands can be considered busy even though a majority of the frequency bands remains idle and can be available.

In the United States, the available frequency bands, which can be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

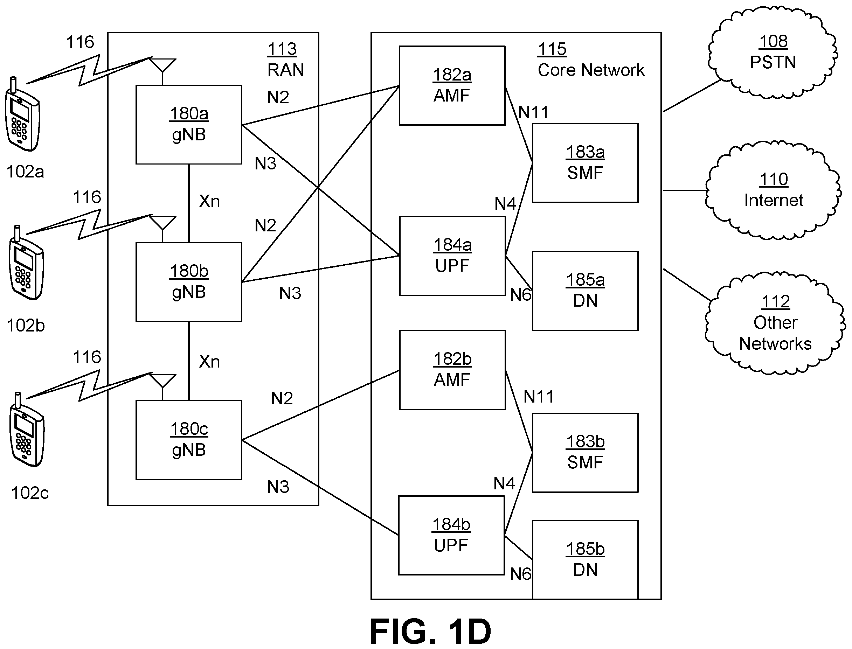

FIG. 1D is a system diagram illustrating the RAN 113 and the CN 115 according to an embodiment. As noted above, the RAN 113 can employ an NR radio technology to communicate with the WTRUs 102a, 102b, 102c over the air interface 116. The RAN 113 can also be in communication with the CN 115.

The RAN 113 can include gNBs 180a, 180b, 180c, though it will be appreciated that the RAN 113 can include any number of gNBs while remaining consistent with an embodiment. The gNBs 180a, 180b, 180c can each include one or more transceivers for communicating with the WTRUs 102a, 102b, 102c over the air interface 116. In one embodiment, the gNBs 180a, 180b, 180c can implement MIMO technology. For example, gNBs 180a, 108b can utilize beamforming to transmit signals to and/or receive signals from the gNBs 180a, 180b, 180c. Thus, the gNB 180a, for example, can use multiple antennas to transmit wireless signals to, and/or receive wireless signals from, the WTRU 102a. In an embodiment, the gNBs 180a, 180b, 180c can implement carrier aggregation technology. For example, the gNB 180a can transmit multiple component carriers to the WTRU 102a (not shown). A subset of these component carriers can be on unlicensed spectrum while the remaining component carriers can be on licensed spectrum. In an embodiment, the gNBs 180a, 180b, 180c can implement Coordinated Multi-Point (CoMP) technology. For example, WTRU 102a can receive coordinated transmissions from gNB 180a and gNB 180b (and/or gNB 180c).

The WTRUs 102a, 102b, 102c can communicate with gNBs 180a, 180b, 180c using transmissions associated with a scalable numerology. For example, the OFDM symbol spacing and/or OFDM subcarrier spacing can vary for different transmissions, different cells, and/or different portions of the wireless transmission spectrum. The WTRUs 102a, 102b, 102c can communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c can be configured to communicate with the WTRUs 102a, 102b, 102c in a standalone configuration and/or a non-standalone configuration. In the standalone configuration, WTRUs 102a, 102b, 102c can communicate with gNBs 180a, 180b, 180c without also accessing other RANs (e.g., such as eNode-Bs 160a, 160b, 160c). In the standalone configuration, WTRUs 102a, 102b, 102c can utilize one or more of gNBs 180a, 180b, 180c as a mobility anchor point. In the standalone configuration, WTRUs 102a, 102b, 102c can communicate with gNBs 180a, 180b, 180c using signals in an unlicensed band. In a non-standalone configuration WTRUs 102a, 102b, 102c can communicate with/connect to gNBs 180a, 180b, 180c while also communicating with/connecting to another RAN such as eNode-Bs 160a, 160b, 160c. For example, WTRUs 102a, 102b, 102c can implement DC principles to communicate with one or more gNBs 180a, 180b, 180c and one or more eNode-Bs 160a, 160b, 160c substantially simultaneously. In the non-standalone configuration, eNode-Bs 160a, 160b, 160c can serve as a mobility anchor for WTRUs 102a, 102b, 102c and gNBs 180a, 180b, 180c can provide additional coverage and/or throughput for servicing WTRUs 102a, 102b, 102c.

Each of the gNBs 180a, 180b, 180c can be associated with a particular cell (not shown) and can be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c can communicate with one another over an Xn interface.

The CN 115 shown in FIG. 1D can include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements can be owned and/or operated by an entity other than the CN operator.

The AMF 182a, 182b can be connected to one or more of the gNBs 180a, 180b, 180c in the RAN 113 via an N2 interface and can serve as a control node. For example, the AMF 182a, 182b can be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing can be used by the AMF 182a, 182b in order to customize CN support for WTRUs 102a, 102b, 102c based on the types of services being utilized WTRUs 102a, 102b, 102c. For example, different network slices can be established for different use cases such as services relying on ultra-reliable low latency (URLLC) access, services relying on enhanced massive mobile broadband (eMBB) access, services for machine type communication (MTC) access, and/or the like. The AMF 162 can provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b can be connected to an AMF 182a, 182b in the CN 115 via an N11 interface. The SMF 183a, 183b can also be connected to a UPF 184a, 184b in the CN 115 via an N4 interface. The SMF 183a, 183b can select and control the UPF 184a, 184b and configure the routing of traffic through the UPF 184a, 184b. The SMF 183a, 183b can perform other functions, such as managing and allocating UE IP address, managing PDU sessions, controlling policy enforcement and QoS, providing downlink data notifications, and the like. A PDU session type can be IP-based, non-IP based, Ethernet-based, and the like.

The UPF 184a, 184b can be connected to one or more of the gNBs 180a, 180b, 180c in the RAN 113 via an N3 interface, which can provide the WTRUs 102a, 102b, 102c with access to packet-switched networks, such as the Internet 110, to facilitate communications between the WTRUs 102a, 102b, 102c and IP-enabled devices. The UPF 184, 184b can perform other functions, such as routing and forwarding packets, enforcing user plane policies, supporting multi-homed PDU sessions, handling user plane QoS, buffering downlink packets, providing mobility anchoring, and the like.

The CN 115 can facilitate communications with other networks. For example, the CN 115 can include, or can communicate with, an IP gateway (e.g., an IP multimedia subsystem (IMS) server) that serves as an interface between the CN 115 and the PSTN 108. In addition, the CN 115 can provide the WTRUs 102a, 102b, 102c with access to the other networks 112, which can include other wired and/or wireless networks that are owned and/or operated by other service providers. In one embodiment, the WTRUs 102a, 102b, 102c can be connected to a local Data Network (DN) 185a, 185b through the UPF 184a, 184b via the N3 interface to the UPF 184a, 184b and an N6 interface between the UPF 184a, 184b and the ON 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, ON 185a-b, and/or any other device(s) described herein, can be performed by one or more emulation devices (not shown). The emulation devices can be one or more devices configured to emulate one or more, or all, of the functions described herein. For example, the emulation devices can be used to test other devices and/or to simulate network and/or WTRU functions.

The emulation devices can be designed to implement one or more tests of other devices in a lab environment and/or in an operator network environment. For example, the one or more emulation devices can perform the one or more, or all, functions while being fully or partially implemented and/or deployed as part of a wired and/or wireless communication network in order to test other devices within the communication network. The one or more emulation devices can perform the one or more, or all, functions while being temporarily implemented/deployed as part of a wired and/or wireless communication network. The emulation device can be directly coupled to another device for purposes of testing and/or can perform testing using over-the-air wireless communications.

The one or more emulation devices can perform the one or more, including all, functions while not being implemented/deployed as part of a wired and/or wireless communication network. For example, the emulation devices can be utilized in a testing scenario in a testing laboratory and/or a non-deployed (e.g., testing) wired and/or wireless communication network in order to implement testing of one or more components. The one or more emulation devices can be test equipment. Direct RF coupling and/or wireless communications via RF circuitry (e.g., which can include one or more antennas) can be used by the emulation devices to transmit and/or receive data.

This application describes a variety of aspects, including tools, features, examples, models, approaches, etc. Many of these aspects are described with specificity and, at least to show the individual characteristics, are often described in a manner that can sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

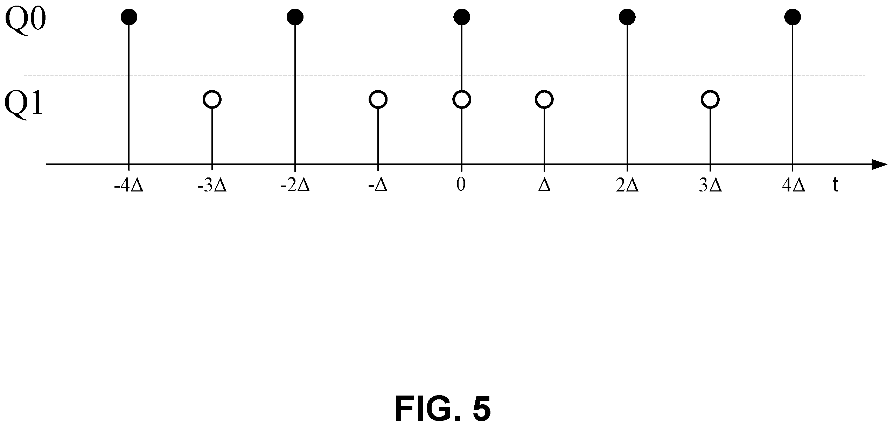

The aspects described and contemplated in this application can be implemented in many different forms. FIGS. 5-9 described herein can provide some examples, but other examples are contemplated. The discussion of FIGS. 5-9 does not limit the breadth of the implementations. At least one of the aspects generally relates to video encoding and decoding, and at least one other aspect generally relates to generating a bitstream, storing a bitstream, and/or transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described. As used herein, a bitstream may or may not be transmitted.

In the present application, the terms "reconstructed" and "decoded" can be used interchangeably, the terms "pixel" and "sample" can be used interchangeably, the terms "image," "picture" and "frame" can be used interchangeably.

Various methods are described herein, and each of the methods comprises one or more steps or actions for achieving the described method. Unless a specific order of steps or actions is required for proper operation of the method, the order and/or use of specific steps and/or actions can be modified or combined. Additionally, terms such as "first", "second", etc. can be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and can occur, for example, before, during, or in an overlapping time period with the second decoding.

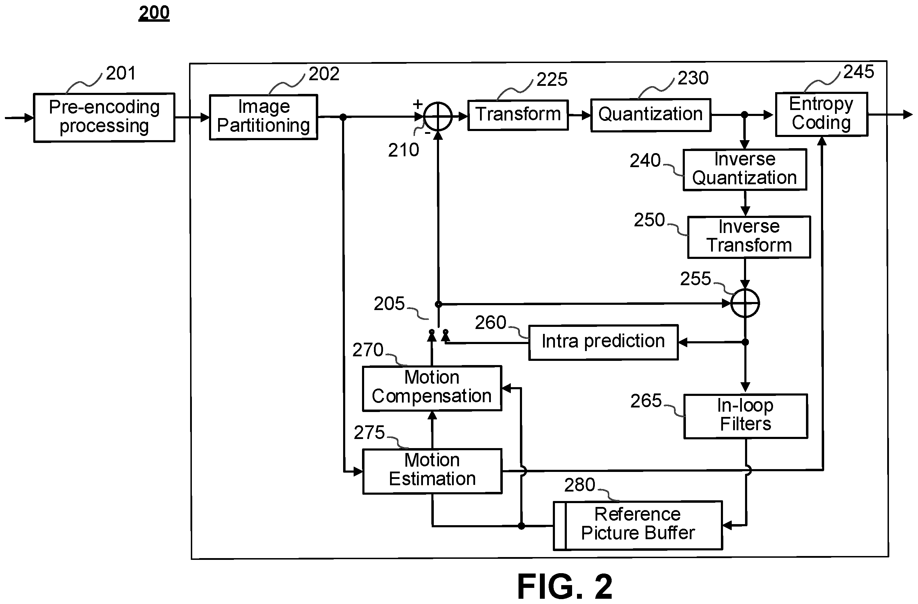

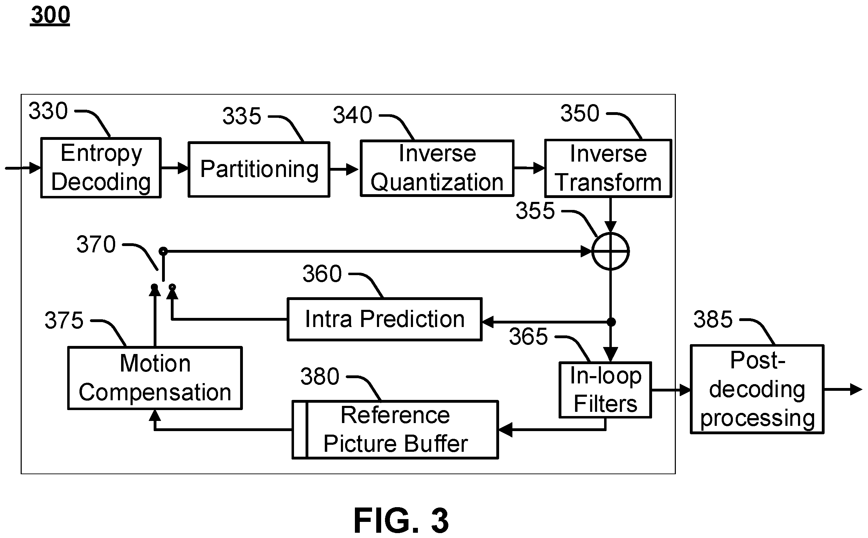

Various methods and other aspects described in this application can be used to modify modules, for example, decoding modules, of a video encoder 200 and decoder 300 as shown in FIG. 2 and FIG. 3. Moreover, the subject matter disclosed herein can be applied, for example, to any type, format or version of video coding, whether described in a standard or a recommendation, whether pre-existing or future-developed, and extensions of any such standards and recommendations. Unless indicated otherwise, or technically precluded, the aspects described in this application can be used individually or in combination.

Various numeric values are used in examples described the present application, such as 0, 1, 2, 3, 4, 6, 7, 8, 11, 16, 18, 26, 33, 45, 50, 64, 65, 66, 67, 80, 129, 131, 135, 1456, etc. These and other specific values are for purposes of describing examples and the aspects described are not limited to these specific values.

FIG. 2 illustrates an example of a d video encoder 200 (e.g., a block based hybrid video encoder). Variations of example encoder 200 are contemplated, but the encoder 200 is described below for purposes of clarity without describing all expected variations.

Before being encoded, the video sequence may go through a pre-encoding processing (201), for example, by doing one or more of applying a color transform to an input color picture (e.g., converting from RGB 4:4:4 to CyBC 4:2:0) or performing a remapping of input picture components, for example, in order to obtain a transmission distribution that is resilient (e.g., more resilient) to compression (e.g., using a histogram equalization of one of the color components). Metadata may be associated with pre-processing and may be attached to the bitstream.

In the encoder 200, a picture may be encoded (e.g., may be encoded by the encoder elements) as described below. The picture to be encoded may be partitioned (202) and processed in units of, for example, Cues (Coding Units). Each unit may be encoded using, for example, either an intra mode or an inter mode. When a unit is encoded in an intra mode, intra prediction (260) may be performed. In an inter mode, motion estimation (275) and motion compensation (270) may be performed. The encoder may determine (205) whether one of intra mode or inter mode will be used for encoding the CU, the intra/inter decision may be indicated (e.g., by the encoder), for example, by a prediction mode indicator (e.g., a prediction mode flag). Prediction residuals may be calculated, for example, by subtracting (210) the predicted block from the original image block. In intra frames, CUs may be intra-predicted (e.g., in intra (I) frames) whereas in inter frames, a CU may be either intra-predicted or inter-predicted.

Prediction residuals may be transformed at 225 and quantized at 230. One or more of the quantized transform coefficients motion vectors, or other syntax elements (e.g., the picture partitioning information) may be entropy coded at 245 to output a bitstream. The encoder may apply quantization directly (e.g., and skip the transform) to the non-transformed residual transmission. The transform and quantization may be bypassed (e.g., by the encoder). For example, the residual may be coded (e.g., coded directly without the application of the transform or quantization processes).

An encoded block may be decoded (e.g., by the encoder) to provide a reference (e.g., a reference for further predictions). The quantized transform coefficients may be de-quantized at 240 and inverse transformed at 250 (e.g., inverse transformed to decode prediction residuals). The decoded prediction residuals and the predicted block may be combined at 255, and an image block may be reconstructed. In-loop filters at 265 may be applied to the reconstructed picture to perform, for example, deblocking/SAO (Sample Adaptive Offset)/ALF (Adaptive Loop Filter) filtering (e.g., to reduce encoding artifacts). The filtered image may be stored in a reference picture buffer at 280.

FIG. 3 illustrates a block diagram of an example video decoder 300. In the decoder 300, a bitstream may be decoded (e.g., by the decoder elements) as described herein. Video decoder 300 may perform a decoding pass reciprocal to the encoding pass as described in FIG. 2. As stated herein, the encoder 200 may perform video decoding as part of encoding video data.

In particular, the input of the video decoder may include video data (e.g., a video bitstream), which may be generated by the video encoder 200. The bitstream may be entropy decoded at 330 (e.g., to obtain one or more transform coefficients, prediction modes, motion vectors, or other coded information). The picture partition information may indicate how the picture is partitioned. The decoder may divide the picture according to the decoded picture partitioning information at 355. The transform coefficients may be de-quantized at 340 and inverse transformed at 350 to decode the prediction residuals. The predicted block may be obtained at 370 from intra prediction at 360 or motion-compensated prediction (e.g., inter prediction) at 375. The decoded prediction residuals and the predicted block may be combined at 355, and an image block may be reconstructed. In-loop filters may be applied to the reconstructed image at 365. The filtered image may be stored at a reference picture buffer at 380. The contents of the reference picture buffer 380 on the decoder side may be identical (e.g., for a picture) to the contents of the reference picture buffer 280 on the encoder 200 side.

The decoded picture may further go through post-decoding processing at 385, for example, one or more of an inverse color transform (e.g., conversion from YcbCr 4:2:0 to RGB 4:4:4) or an inverse remapping (e.g., performing the inverse of the remapping technique performed in the pre-encoding processing at 201). The post-decoding processing may use metadata derived in the pre-encoding processing and may be signaled in video data (e.g., the bitstream). In an example, the decoded images (e.g., after application of the in-loop filters 365 and/or after post-decoding processing 385, if post-decoding processing is used) may be sent to a display device for rendering to a user.

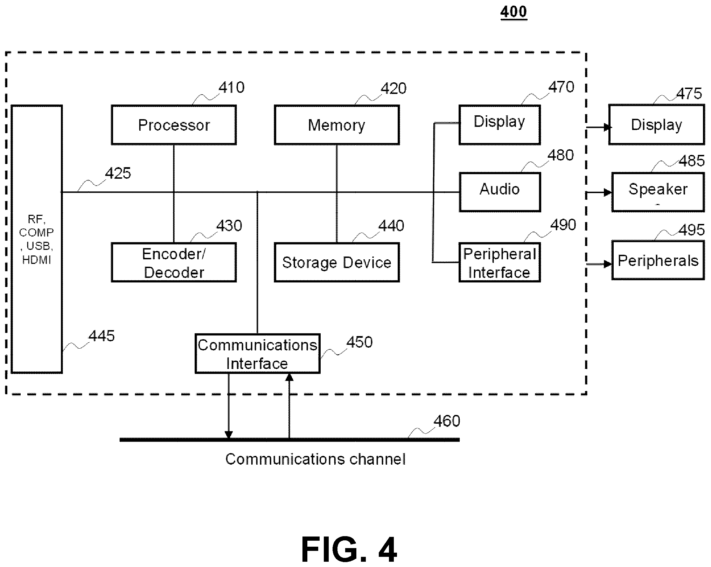

FIG. 4 is a diagram showing an example of a system in which various aspects and examples described herein can be implemented. System 400 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, can be embodied in a single integrated circuit (IC), multiple Ics, and/or discrete components. For example, in at least one example, the processing and encoder/decoder elements of system 400 are distributed across multiple Ics and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that can be included in a device to perform the encoding and/or decoding functions. As is known, a device can include one or both of the encoding and decoding modules. Additionally, encoder/decoder module 430 can be implemented as a separate element of system 400 or can be incorporated within processor 410 as a combination of hardware and software as known to those skilled in the art.

Program code to be loaded onto processor 410 or encoder/decoder 430 to perform the various aspects described in this document can be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device can be either the processor 410 or the encoder/decoder module 430) is used for one or more of these functions. The external memory can be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 can be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, can be implemented, for example, within a separate input processing IC or within processor 410 as necessary. Similarly, aspects of USB or HDMI interface processing can be implemented within separate interface Ics or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 can be provided within an integrated housing, Within the integrated housing, the various elements can be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 can be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 can be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices can be communicatively coupled to system 400 via dedicated connections through respective interfaces 470, 480, and 490. Alternatively, the output devices can be connected to system 400 using the communications channel 460 via the communications interface 450. The display 475 and speakers 485 can be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal can be provided via dedicated output connections, including, for example, HDMI ports, USB ports, or COMP outputs.

The examples can be carried out by computer software implemented by the processor 410 or by hardware, or by a combination of hardware and software. As a non-limiting example, the examples can be implemented by one or more integrated circuits. The memory 420 can be of any type appropriate to the technical environment and can be implemented using any appropriate data storage technology, such as optical memory devices, magnetic memory devices, semiconductor-based memory devices, fixed memory, and removable memory, as non-limiting examples. The processor 410 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, for example, quantization parameters, states, switching states, dummy states, etc., are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application can refer to "determining" various pieces of information. Determining the information can include one or more of, for example, estimating the information, calculating the information, predicting the information, or retrieving the information from memory. Obtaining can include receiving, retrieving, constructing, generating, and/or determining.

Further, this application can refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application can refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as is clear to one of ordinary skill in this and related arts, for as many items as are listed.

Also, as used herein, the word "signal" refers to, among other things, indicating something to a corresponding decoder. Encoder signals can include, for example, intra prediction mode candidates, number of partition mode candidates, block size, slice type, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various examples. It is to be appreciated that signaling can be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described example. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on, or accessed or received from, a processor-readable medium.

Many examples are described herein. Features of examples can be provided alone or in any combination, across various claim categories and types. Further, examples can include one or more of the features, devices, or aspects described herein, alone or in any combination, across various claim categories and types. For example, features described herein can be implemented in a bitstream or signal that includes information generated as described herein. The information can allow a decoder to decode a bitstream, the encoder, bitstream, and/or decoder according to any of the embodiments described. For example, features described herein can be implemented by creating and/or transmitting and/or receiving and/or decoding a bitstream or signal. For example, features described herein can be implemented a method, process, apparatus, medium storing instructions, medium storing data, or signal. For example, features described herein can be implemented by a TV, set-top box, cell phone, tablet, or other electronic device that performs decoding. The TV, set-top box, cell phone, tablet, or other electronic device can display (e.g., using a monitor, screen, or other type of display) a resulting image (e.g., an image from residual reconstruction of the video bitstream). The TV, set-top box, cell phone, tablet, or other electronic device can receive a signal including an encoded image and perform decoding.

Examples described herein may be associated with video compression. Examples may be associated with supporting dependent quantization with modified quantization states. Instead of using fixed 4 or 8 states quantization states, a higher number of quantization states may be described herein, and the number of states may be adaptively switched between.

The compression efficiency may be increased, e.g., to reduce the bitrate while maintaining the quality, or equivalently to improve the quality while maintaining the bitrate.

Video codecs may include independent scalar quantization with uniform reconstruction quantizers (URQs). The reconstructed transform coefficients of URQs may be completely denoted by integer multiples of a quantization step size $\Delta$. The integer may specify the associated transform coefficient level, which may be transmitted as quantization indexes $q$. The mapping of quantization indexes $q$ to reconstructed transform coefficients t' may be given by the relationship, as depicted by Equation 1:

$$ t' = q \times \Delta. \tag{1} $$

For maximizing the coding efficiency, the encoder may select the quantization indexes a that minimize a Lagrangian cost function, as depicted by Equation 2:

$$ J = D + \lambda R \tag{2} $$

where $D$ represents the distortion and $R$ represents the number of bits that may be used (e.g., that are required) for transmitting the quantization indexes $q$. The Lagrange multiplier $\lambda$ may be chosen based on the quantization step size $\Delta$.

In some example encoders, a Rate-Distortion Optimized Quantization (RDOQ) algorithm may be used for selecting the quantization indexes $q$. The RDOQ algorithm may take the dependencies between quantization indexes q that are caused by the entropy coding into account.

An independent scalar quantization may map a (e.g., one) transform coefficient into one quantization index once, and the set of reconstructed transform coefficients may constitute an orthogonal lattice in the $N$-dimensional space ($N$ represents the number of transform coefficients in a transform block).

A form of vector quantization may be applied. Unconstrained vector quantization may be complex for the area of video coding. Sign Data Hiding (SDH) may be used as a type of vector quantization.

Dependent Quantization (DQ) may be included in video codecs. In quantization processes in video codecs, DQ, also referred to as Trellis-Coded Quantization (TCQ), may replace independent scalar quantization and the RDOQ to select the quantization indexes in the encoder as used in the video codec. DQ may refer to an approach in which the set of available reconstruction values for a transform coefficient depends on the values of the transform coefficient levels that precede the current transform coefficient level in reconstruction order.

From a decoder point of view, quantizers (e.g., two quantizers) may be specified and a procedure may be used for switching between the two quantizers. The available reconstruction values may be denoted by integer multiples of a quantization step size $\Delta$ for both scalar quantizers. One quantizer may include the even multiples of $\Delta$, and the other quantizer may include the odd multiples of $\Delta$. The switching between the two scalar quantizers may be described by a state machine with $2^K$ states ($K \geq 2$), where a state may be associated with one of the scalar quantizers. The current state and, thus, the quantizer used for a current transform coefficient may be determined (e.g., uniquely determined) by the previous state and the value of the previous quantization index. For encoding, the potential transitions between the two scalar quantizers may be represented by a trellis with $2^K$ states per sample. Selecting the sequence of quantization indexes may be equivalent to finding the trellis path with minimum rate-distortion cost. A solution may be found by the Viterbi algorithm.

DQ may be considered as a vector quantizer for large dimensions, with a restricted set of values for the vector components. In DQ, the available reconstruction vectors may be packed denser in the N-dimensional vector space, which may provide a part of the space-filling advantage of vector quantization. For a given average number of available reconstruction vectors per N-dimensional unit volume, the average distortion between an input vector and the closest reconstruction vector may be reduced compared to the conventional scalar quantization.

The packing density in the high-dimensional signal space and the coding efficiency for long sample sequences may be maximized by choosing the state transitions (state machine) properly. The achievable packing density and the encoding complexity may increase with the number of states.

An example DQ may include 4 states. The two scalar quantizers that may be used, denoted by $Q_0$ and $Q_1$, are illustrated in FIG. 5. The reconstruction values for $Q_0$ (filled circles) may be given by the even multiples of the quantization step size $\Delta$; the reconstruction values for $Q_1$ (hollow circles) may be given by the odd multiples of $\Delta$ and the value of zero.

The scalar quantizer used ($Q_0$ or $Q_1$) may not be explicitly signaled in vide data (e.g., the bitstream). The quantizer used for a transform coefficient may be selected by a state machine.

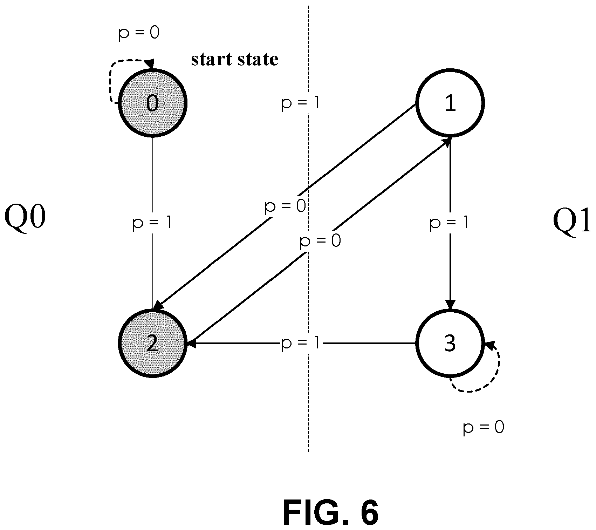

An example DQ with 4 states may be used. The 4-state based quantizer selection process is illustrated in FIG. 6. The transform coefficients of a block may be reconstructed in a pre-defined order, which may be indicated by the indexes $n$ = 0, 1, $\cdots$, $N$ - 1. The initial state $s_0$ (for the first transform coefficient $t_0$ in coding order) may be set equal to 0. Given a current state $s_n$ and the value of the current quantization index $q_n$, the next state $s_{n+1}$ may be (e.g., uniquely) determined by the current state $s_n$ and the parity $p_n$ of the current quantization index $q_n$. As shown in Table 1, for transform coefficients $t_n$ with associated states $s_n$ equal to 0 or 1, the quantizer $Q_0$ may be used; and for transform coefficients $t_n$ with states $s_n$ equal to 2 or 3, the quantizer $Q_1$ may be used. Table 1 may be represented as a following 2-D array state transition table, as depicted in Equation (3). Table 1 may include 4-state transitions for quantizer selection. $\boldsymbol{p_n}$ represents the parity of the current quantizer index $\boldsymbol{q_n}$.

$$4\text{stateTransTable}[\cdot][\cdot] = \left\{\{0,2\},\{2,0\},\{1,3\},\{3,1\}\right\}. \tag{3}$$

| Table 1 state $s_n$ | quantizer used | next state $s_{n+1}$ | |
|---|---|---|---|
| | | $p_n = 0$ | $p_n = 1$ |
| 0 | $Q_0$ | 0 | 2 |
| 1 | $Q_0$ | 2 | 0 |
| 2 | $Q_1$ | 1 | 3 |
| 3 | $Q_1$ | 3 | 1 |

Given the $N$ quantization indexes $q_n$ of a block, with $n$ indicating the coding order, the associated reconstructed transform coefficients $t'_n$ can be obtained by the following simple pseudo code, as illustrated in Equation (4):

$$s_n = 0$$

$$\text{for } n = 0 \text{ to } N - 1 \text{ do}$$

$$t'_n = \left(2 \times q_n - (s_n \gg 1) \times sgn(q_n)\right) \times \Delta \tag{4}$$

$$s_{n+1} = 4\text{stateTransTable}[s_n][q_n \,\&\, 1]$$

end for

where sgn(.) specifies the signum function, $\Delta$ denotes the quantization step size; the operator "»" specifies a bit shift to the right, so that ($s_n \gg 1$) indicates the quantizer used; the parity $p_n$ of the quantization index $q_n$ may be obtained by applying the bit-wise "and" operator & (two's complement arithmetic), according to q_n & 1.

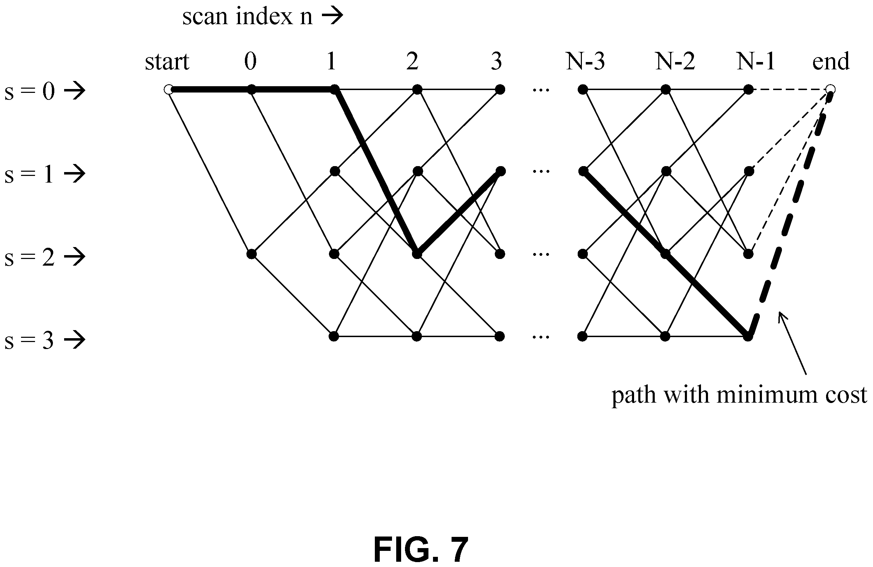

The selection of quantization indexes $q_n$ in the encoder may aim at minimizing the rate-distortion cost, which may be equivalent to finding the path through the trellis graph in DQ, depicted in FIG. 7, as given by the Viterbi algorithm. The trellis may be processed in coding order. Possible transitions (connections of the trellis nodes) between a scan index $n$ - 1 and a next scan index $n$ may be evaluated. For a destination node, the connection with the minimum rate-distortion cost $J_n$ may be kept and the associated cost $J_n$ may be assigned to the destination node. This process may be continued until $n = N$ - 1, where 4 surviving paths through the trellis may be obtained. At the end, the path with the minimum cost $J_{N-1}$ may be selected, which may provide the selected sequence of quantization indexes $n = q_0, q_1, \cdots, q_{N-1}$. A path with minimum cost may be highlighted as a bold line in FIG. 7.

DQ may include 8 states. As described herein, the coding efficiency of trellis-coded quantization may be increased by increasing the number of quantization states (at the cost of a higher encoder complexity). DQ with 8 quantization states in addition to a DQ with 4 quantization state may be supported.

The 8-state based quantizer selection process is illustrated in Table 2. For transform coefficients $t_n$ with associated even states $s_n$ (which equal to 0, 2, 4 or 6), the quantizer $Q_0$ may be used. For transform coefficients $t_n$ with odd states $s_n$ (which equal to 1, 3, 5 or 7), the quantizer $Q_1$ may be used. The associated 2-D array state transition table may be represented, as depicted in Equation 5 and Table 2. Table 2 may be associated with 8-state transitions for quantizer

selection.

$$8\text{stateTransTable}[\cdot][\cdot] =$$
$$\{\{0,2\},\{5,7\},\{1,3\},\{6,4\},\{2,0\},\{4,6\},\{3,1\},\{7,5\}\}. \tag{5}$$

Table 2

| state $s_n$ | quantizer used | next state $s_{n+1}$ | |
| --- | --- | --- | --- |
| | | $p_n = 0$ | $p_n = 1$ |
| 0 | $Q_0$ | 0 | 2 |
| 1 | $Q_1$ | 5 | 7 |
| 2 | $Q_0$ | 1 | 3 |
| 3 | $Q_1$ | 6 | 4 |
| 4 | $Q_0$ | 2 | 0 |
| 5 | $Q_1$ | 4 | 6 |
| 6 | $Q_0$ | 3 | 1 |
| 7 | $Q_1$ | 7 | 5 |

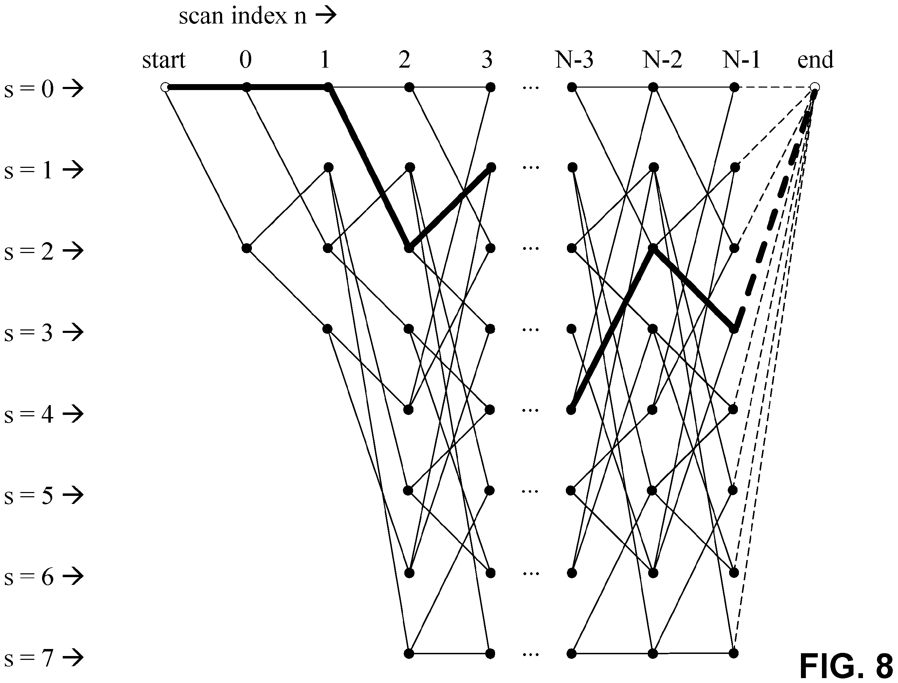

When DQ with 8 quantization states is applied, 8 surviving paths may be yielded through the trellis for determining the quantization indexes in the encoder, as depicted in FIG. 8. As the number of trellis states is increased, the achievable packing density in the signal space may be increased, which may result in the improvement of the coding efficiency. The number of surviving paths comparisons may be increased, which may result in the increase of the computational burdens.

For supporting examples of dependent quantization (4 and 8 states) in a unified framework, the decoding process for dependent quantization may be described herein. The state transition table in Equation (3) is modified as follows, as depicted in Equation (6):

$$4\text{stateTransTable}[\cdot][\cdot] = \{\{0,1\},\{2,3\},\{1,0\},\{3,2\}\}. \tag{6}$$

The mapping of reconstructed transform coefficients $t'_n$ from quantization indexes $q_n$ in Equation (4) may be modified as follows, as depicted in Equation (7):

$$t'_n = \left(2 \times q_n - (s_n \,\&\, 1) \times sgn(q_n)\right) \times \Delta. \tag{7}$$

Besides the mapping of transform coefficients level to intermediate quantization indexes, two more aspects for efficient entropy coding that depend on the quantization state s may be described herein. A quantization index $q$ may be mapped to a sequence of bins, which may be coded using the context-based adaptive binary arithmetic coding (CABAC) engine. There may be two classes of bins: bins that are coded using adaptive probability models (e.g., in the regular mode of the coding engine), and bins that are transmitted in the bypass mode of the arithmetic coding engine. An absolute quantization index $|q|$ may be mapped into the bins: sig, gt1, par, gt3, and the non-binary syntax element rem. At the decoder side, $|q|$ may be constructed according to Equation (8):

$$|q| = sig + gt1 + par + 2 \times (gt3 + rem). \tag{8}$$

The bins sig, gt1, par and gt3 may be coded in the regular mode of the CABAC engine. The non-binary syntax element rem may be binarized using Golomb-Rice and Exp-Golomb codes, and the resulting bins may be coded in bypass mode. The binarization may be parameterized by a so-called Rice parameter. The quantization state s may be applied on the context selection for sig, and the related derivation may be re-written, as depicted in Equation (9):

$$sig_{ctxSet}[\,s\,\&\,3\,] = \{\,0,1,0,2\,\}. \tag{9}$$

A usage of quantization state s may be the derivation of the mapping parameter ZeroPos for transform coefficient levels coded in bypass mode, which may be re-written, as depicted in Equation (10):

$$ZeroPos = \big(\,1 + (s\,\&\,1)\big) \ll \text{rice parameter} \tag{10}$$

where the operator "«" specifies a bit shift to the left.

The decoding process may be designed such that the state transition table used depends on the selected variant of dependent quantization. Remaining aspects may be the same for both 4-state and 8-state versions of dependent quantization.

The used example of DQ may be indicated in the picture header (PH) or the picture parameter set (PPS). As shown in Table 3, the PH syntax element pic dep_quant enabled flag may be replaced by the syntax element pic dep_quant enabled idc, which may be coded using 2 bits. In table 3, the used variant of dependent quantization may be indicated in the picture header or the picture parameter set.

Table 3

| | |
|---|---|
| ... | |
| if ( !pps_dep_quant_enabled_idc ) | |
| pic dep_quant enabled idc | u(2) |
| ... | |

As depicted in Table 4, the selection of the state transition table for a transform block may depend on pic dep_quant enabled idc. pic dep_quant enabled idc equal to 0 may specify that dependent quantization is disabled for slices associated with the PH. pic dep_quant enabled idc equal to 1 may specify that dependent quantization with 4 states is used in slices associated with the PH, where the 2D-array 4stateTransTable in Equation (6) is used. pic_dep_quant_enabled_flag equal to 2 may specify that dependent quantization with 8 states is used in slices associated with the PH, where the 2D-array 8stateTransTable in Equation (5) is used. In Table 4, the used variant of the state transition table for a transform block may be decided by pic dep_quant enabled idc.

Table 4

| residual_coding( x0, y0, log2TbWidth, log2TbHeight, cIdx ) { | Descriptor |
|---|---|
| ... | |
| stateTab = pic dep_quant_enabled_idc > 0 ? ( pic_dep_quant_enabled_idc > 1 ? 8stateTransTable : 4stateTransTable ) : 0 | |
| ... | |

In some examples, the used example DQ with 4 states or 8 states may be indicated in the slice/picture level. The selection of the state transition table for a transform block may be decided by the PH syntax element pic dep_quant enabled idc. The specific statistics of a transform block, e.g., the number of transform coefficients $N$ in a transform block, may not be taken into consideration for the number of states selection.

In examples, the number of states in DQ may be extended (e.g., to 16). The number of states (between 8 and 16) may be adaptively changed to keep the encoder complexity as low as possible.

An extended number of states machine may be used with a custom state transition table and state exchanging in dependent quantization. Features described herein may be associated with a state transition table and state exchanging process. An extended number of state machines and a default number of state machines may be switched between based on 1) the block sizes, 2) the block coded with intra/inter mode, 3) the color components (luma/chroma), 4) the quantization parameter (QP) of the block, and/or any other features.

The number of states in DQ may be increased and a transition table may be described herein. The states may be exchanged during cost calculation of DQ. In examples, higher number states DQ and default states DQ may be switched between.

In examples, DQ may include 16 states with 8 dummy states. With the principle of the DQ described herein, a state machine may be applied to switch between the two scalar quantizers ($Q_0$ and $Q_1$), where a state may be associated with one of the scalar quantizers. A current state and, thus, the quantizer used for a current sample may be uniquely determined by the previous state and the value of the previous quantization index.

The coding efficiency of trellis-coded quantization may be increased by increasing the number of states for the state machine (e.g., at the cost of a higher encoder complexity). DQ with 8 states in addition to examples including DQ with 4 quantization state may be supported, since the rest of the part of the codecs may be configured for a number of states (e.g., 8 in an example video codec).

"Dummy states" may be used as described herein. Dummy states may be states which act as their origin states. An origin state may have its own dummy state.

A (e.g., one) dummy state may be used for an origin state. If the default setting has 8 states, there may be 8 original states, 8 dummy states, and a total of 16 states. When there are original N/2 (8) states transition table A as in Table 2, an example N (16) states transition table B may be created by the following steps: 1. create states from 0 to N-1 where even states use $Q_0$, and odd states $Q_1$ for table B; 2. take the first N/4 part of A and put it to the first N/4 part of B; 3. take the last N/4 part of A and put it to the last(4th) N/4 part of B; 4. take the last N/4 part of A and, add N/2 to the states, and put them to the 2nd N/4 part of B; and 5. take the first N/4 part of A and, add N/2 to the states, and put them to the 3rd N/4 part of B.

For example, it may be assumed that N=16 and default table A is given in Table 2. The algorithm as described herein may produce the state transition table B in Table 5. In the table, the first 8 states may be the original states and the last 8 states may be the dummy states. (i+8) th is the dummy state of I th. Table 15 depicts 16-state transitions for quantizer selection.

Table 5

| state $s_n$ | quantizer used | next state $s_{n+1}$ | |
| --- | --- | --- | --- |
| | | $p_n = 0$ | $p_n = 1$ |
| 0 | $Q_0$ | 0 | 2 |
| 1 | $Q_1$ | 5 | 7 |
| 2 | $Q_0$ | 1 | 3 |
| 3 | $Q_1$ | 6 | 4 |
| 4 | $Q_0$ | 10 | 8 |
| 5 | $Q_1$ | 12 | 14 |
| 6 | $Q_0$ | 11 | 9 |
| 7 | $Q_1$ | 15 | 13 |
| 8 | $Q_0$ | 8 | 10 |
| 9 | $Q_1$ | 13 | 15 |
| 10 | $Q_0$ | 9 | 11 |
| 11 | $Q_1$ | 14 | 12 |
| 12 | $Q_0$ | 2 | 0 |
| 13 | $Q_1$ | 4 | 6 |
| 14 | $Q_0$ | 3 | 1 |
| 15 | $Q_1$ | 7 | 5 |

For transform coefficients $t_n$ with associated even states $s_n$, the quantizer $Q_0$ may be used. For transform coefficients $t_n$ with odd states $s_n$, the quantizer $Q_1$ may be used. The associated 2-D array 16-state transition table may be represented, as depicted in Equation (11):

$$16\text{stateTransTable}[\cdot][\cdot]$$

$$= \{\{0,2\},\{5,7\},\{1,3\},\{6,4\}\ \{10,8\},\{12,14\},\{11,9\},\{15,13\},\{8,10\},\{13,15 \quad (11)$$

$$\{9,11\},\{14,12\},\{2,0\},\{4,6\},\{3,1\},\{7,5\}\}.$$

The state transition may be specified in Equation (12) without a table look-up:

$$s_{n+1} = \Big(\big((s_n \gg 2)\&1\big)! = \big((s_n \gg 3)\&1\big)\Big)\,?\,8\!:\!0 \;+$$

$$(stateTransTab \gg ((s\_n > 8?\,s\_n - 8\!:\,s\_n) \ll 3 + (q\_n \,\&\, 1) \ll 2))\;\&\;15$$

(12)

where the parameter *stateTransTab* specifies the 8-state transition state transition table in Table 2.. Equation 12 may be used for the state transition table in Table 5.

The number of states may be extended to 2N (64) by using N (16) states table in Table 5 and the algorithm described herein. In examples, the states may be increased as much as possible in the practice. If the number of states continue to increase (i.e. $2^K > 16$), Equation (12) may be modified. The decoding process may be configured such that the state transition table used depends on the selected variant of dependent quantization. Remaining aspects may be the same for versions of dependent quantization (e.g., 4 states, 8 states, and $2^K > 8$ states).

Features described herein may be associated with state exchanging. In DQ, a state may keep a possible example of RD optimized quantization indices. During the RD cost calculation, there may be N possible examples where the first N/2 presents original states, and the last N/2 may be for dummy states. In examples, the dummy and the original state may be exchanged if the dummy state (e.g., the dummy state example) is better configured than the original state. It may be possible to the keep one of the first N/2 states (e.g., original states). The exchange of states may give more desirable results than without an exchange of states.

Default and enhanced states DQ may be switched between. An example of a higher number of states in DQ may have extra encoding complexity. To prevent encoder complexity, the default number of state DQ may be switched by using information that may be reachable by decoder. The switching mechanism may be implemented as described herein.

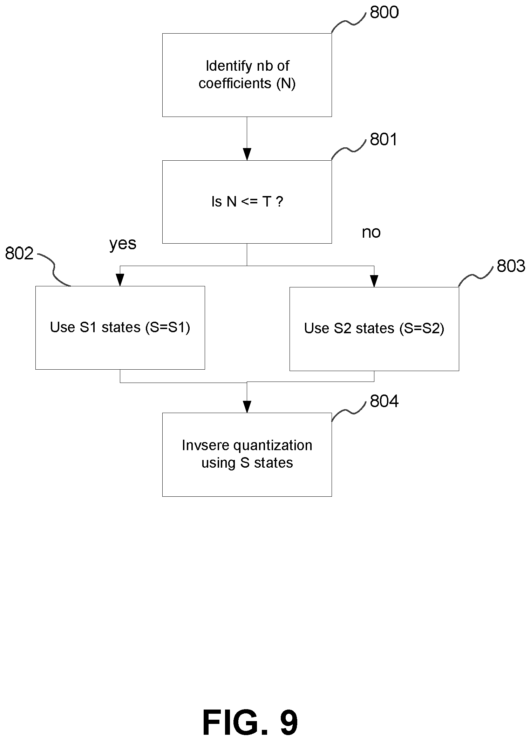

FIG. 9 illustrates an example inverse quantization using S states (e.g., S1 states and S2 states). At 800, for example, a number of coefficients (N) may be identified. The switching mechanism may be based on transform block size. An example of the switching mechanism may be based on the block size. The block size, e.g., width and/or height of the current block may satisfy (e.g., is less than, is greater than, equals, etc.) a number (e.g., threshold T). At 801, for example, it may be determined whether N (e.g., the number of states) is less than or equal to the threshold T. At 802, for example, if N is less than or equal to the threshold T, it may be determined that S1 states are be used. At 803, for example, if N is less than or equal to the threshold T, it may be determined that S2 states are used. A DQ with 8 states may be selected for the transform block. Enhanced states DQ may be applied (e.g., may be applied otherwise). At 804, for example, inverse quantization may be applied using S states (e.g., S1 based on the determination at 802, or S2 based on the determination at 803).

The switching mechanism may be based on block prediction mode (intra/inter). The number of transform coefficient blocks may be related to the block prediction mode. The inter predicted blocks may have a sparser residual than intra predicted blocks, and inter prediction may be more accurate.

In examples, switching may be associated with deciding the number of DQ states used for a transform block based on the block prediction mode. In examples where the block is inter predicted, DQ with default states may be selected for this transform block. DQ with enhanced states may be applied (e.g., may be applied otherwise).

The switching mechanism may be based on the color components (luma/chroma). The human visual system may be less sensitive to color than structure and texture information. In examples, it may be more important to provide a high resolution luma component than to provide such color information for the chroma components. During the video compression, reducing the data loss of luma samples may be more important compared to reducing loss of chroma samples. Fine and accurate quantization for the luma component may be associated with mitigating the information loss.

Switching may be associated with deciding the number of DQ states based on the color components. For chroma components, DQ with default states may be selected. For luma components, DQ with enhanced states may be applied.

The switching mechanism may be based on the quantization parameter (QP). The QP may be a variable used for scaling of transform coefficient levels. The QP range may start from 0 to 63. High QPs may correspond to coarse quantization where most of the transform coefficients are quantized to zero. Low QPs may correspond to fine quantization, where a block may contain more non-zero transform coefficients than high QPs. The QP may impact the number of transform coefficients in a block.

The initial value of QP may be signaled in PPS, may be updated by a QP delta value in the slice segment header, and may be further refined by a potential CU-level QP delta. CU-level QP delta values for luma and chroma components may be signaled separately. For chroma components, a QP offset may be specified for increasing the QP parameter range. The initial QP in PPS may be indicated as $qP$, the slice-level QP may be indicated as $qP_{slice}$, the final luma QP used for a transform block may be represented by $qP_Y$, and final chroma QP may be represented by $qP_{Cx}$.

In examples, switching may be used to select the number of DQ states used for a transform block based on the quantization parameter. Such that the quantization parameter, e.g., the initial QP in PPS $qP$, or the slice-level QP $qP_{slice}$, or the final CU-level QP $qP_Y$ and $qP_{Cx}$, satisfies (e.g., is less than, is greater than, equals, etc.) a specific number (e.g., threshold $T$), DQ with default states may be selected for this transform block. DQ with enhanced states may be applied.

The switching mechanism may be applied based on the index of the transform coefficient. Transform coefficients may be quantized one by one from the highest frequency component (e.g., last index) to the lowest frequency component (e.g., first index) by a zig-zag pattern in a block. To decrease the complexity of 16-states DQ, the index of the coefficient may be used for deciding to switch between 8-states or 16-states. An encoder may use a 16-state DQ for the first K or last K transform coefficient. The encoder may use 8 states for the rest of the coefficients.

In examples, an (e.g., one) enhanced transition table may be selected such that N=16,32,64, etc. The transition table may be implemented with or without state exchanging technique. A (e.g., one) switching technique may be selected in order to limit encoder complexity.

The N=16 state DQ may be implemented using the transition table in Table 5 without state exchanging and any switching techniques. The implementation may be as follows where pqData[0] and pqData[2] is even and odd indices of Q0 respectively. pqData[3] and pqData[1] may be even and odd indices of Q1 quantizer respectively.

```
 #if IDCC_16STATES
     m_prevStates[0].checkRdCosts( spt,
pqData[0], pqData[2], decisions[0], decisions[2]);
     m_prevStates[1].checkRdCosts( spt, pqData[3], pqData[1], decisions[5], decisions[7]);
     m_prevStates[2].checkRdCosts( spt, pqData[0], pqData[2], decisions[1], decisions[3]);
     m_prevStates[3].checkRdCosts( spt, pqData[3], pqData[1], decisions[6], decisions[4]);
     m_prevStates[4].checkRdCosts( spt, pqData[0], pqData[2], decisions[8+2], decisions[8+0]);
     m_prevStates[5].checkRdCosts( spt, pqData[3], pqData[1], decisions[8+4], decisions[8+6]);
     m_prevStates[6].checkRdCosts( spt, pqData[0], pqData[2], decisions[8+3], decisions[8+1]);
     m_prevStates[7].checkRdCosts( spt, pqData[3], pqData[1], decisions[8+7], decisions[8+5]);
     m_prevStates[8+0].checkRdCosts( spt, pqData[0], pqData[2], decisions[8+0], decisions[8+2]);
     m_prevStates[8+1].checkRdCosts( spt, pqData[3], pqData[1], decisions[8+5], decisions[8+7]);
     m_prevStates[8+2].checkRdCosts( spt, pqData[0], pqData[2], decisions[8+1], decisions[8+3]);
     m_prevStates[8+3].checkRdCosts( spt, pqData[3], pqData[1], decisions[8+6], decisions[8+4]);
     m_prevStates[8+4].checkRdCosts( spt, pqData[0], pqData[2], decisions[2], decisions[0]);
     m_prevStates[8+5].checkRdCosts( spt, pqData[3], pqData[1], decisions[4], decisions[6]);
     m_prevStates[8+6].checkRdCosts( spt, pqData[0], pqData[2], decisions[3], decisions[1]);
     m_prevStates[8+7].checkRdCosts( spt, pqData[3], pqData[1], decisions[7], decisions[5]);
     #endif
```

In examples, the same number of the states and transition table with state exchanging may be applied without switching. The different may be state exchanging, which may be implemented as follows:

```
for (int i=0;i<8;i++)
 {
     if (decisions[i+8].rdCost<decisions[i].rdCost)
        std:: swap (decisions [i +8], decisions [i]);
 }
```

In examples, the 16 states DQ may be selected with the transition table in Table 5, and state exchanging techniques (e.g., as described herein). The default DQ may be switched based on transform block size as follows:

```
If tu.width >Th1 && tu.height > Th2
       Apply 16 state DQ with state exchanging.
Else
       Apply default DQ.
Endif
```

Two (e.g., two different) thresholds may be defined for width and height of the transform block. A (e.g., one) single threshold may be defined for the area of the transform block.

In examples, a 16-state DQ may be used with a state exchanging and switching mechanism according to a transform coefficient index. For example, 16 states may be used when the index is lower than a threshold K (e.g., unless an 8-state DQ is being used). 16 states TCQ may be used for the first K coefficient.

If there is numcoef coefficient to be quantized, pseudo code may be as follows:

```
For scanIdx = numcoeff ; scanIdx >=0; scanIdx -
       If (numcoeff<K)
              Apply 16 states DQ with state exchanging.
       Else
              Apply default 8 states DQ.
       Endif
 Endfor
```

In examples, a 16-state DQ may be used with a state exchanging and switching mechanism according to a component of the color channel. For example, 16 states may be used when a luma component is encoded. 8 states may be used for the rest of the channel or vice versa. The pseudo code may be as follows:

```
If CU.complD == Luma
        Apply 16 state DQ with state exchanging.
Else
        Apply default DQ.
Endif
```

In examples, a 16-state DQ may be used with a state exchanging and switching mechanism according to a partition tree type. For example, 16 states may be used when encoded block is partitioned by single or dual tree. The pseudo code may be as follows:

```
If CU.treetype==dualTree
        Apply 16 state DQ with state exchanging.
Else
        Apply default DQ.
Endif
Applying a 16-state DQ with state exchanging may occur if the tree type is singleTree.
If CU.treetype==singleTree
        Apply 16 state DQ with state exchanging.
Else
        Apply default DQ.
Endif
```

In examples, a 16-state DQ may be used with a state exchanging and switching mechanism according to whether a low-frequency non-separable transform (LFNST) is applied or not. The pseudo code may be as follows:

```
If TU.LFNST==True
        Apply 16 state DQ with state exchanging.
Else
        Apply default DQ.
Endif
This can be vice versa as follows.
If TU.LFNST==False
        Apply 16 state DQ with state exchanging.
Else
        Apply default DQ.
Endif
```

In examples, a 16-state DQ may be used with a state exchanging and switching mechanism according to a multiple transform selection (MTS) flag of the coding Unit. The pseudo code may be as follows:

```
If CU.MTSFlag==True
        Apply 16 state DQ with state exchanging.
Else
        Apply default DQ.
Endif
This can be vice versa as follows.
If CU.MTSFlag ==False
        Apply 16 state DQ with state exchanging.
Else
        Apply default DQ.
Endif
```

In examples, a 16-state DQ may be used with a state exchanging and switching mechanism according to whether transform skip is applied or not. The pseudo code may be as follows:

```
If CU.TrSkipFlag==True
        Apply 16 state DQ with state exchanging.
Else
        Apply default DQ.
Endif
This can be vice versa as follows.
If CU.TrSkipFlag ==False
        Apply 16 state DQ with state exchanging.
Else
```

```
    Apply default DQ.
Endif
```

In examples, switching between M=8 states DQ and N=16 states DQ may be used to emulate N states DQ in encoder side. In order to switch between M=8 states DQ and N=16 states DQ, the dummy states may not be fully updated. The rdcost values of the original states may be copied over to the corresponding dummy states. The encoder may emulate a 16-state DQ while maintaining 8-state DQ complexity and performance, and the decoder may (e.g., may or may not) modify operation. Regardless of using 16 states (e.g., 16 original states) or emulated 16 states, the decoder may run the same as if there are 16 states (e.g., 16 original states).

In examples, an 8-state DQ may be used in a rate distortion optimization search. The 16-state DQ may be used in final encoding. Complexity may be decreased. During rate distortion optimization, the encoder may try options (e.g., transformation, partitioning, etc.), and all the trials may be done by 8 states with low complexity DQ. After the decision is made, the decided selection of the blocks may be quantized with the 16-state DQ.

In examples, Another way of TCQ with higher states may be associated with applying a higher number of states TCQ on the encoder side. 8 states of TCQ may be applied on the decoder side. A higher number of states TCQ (e.g., compared to a TCQ with a lower number of states) may be seen as a modified search on optimization that modifies (e.g., improves) the performance. In examples, a device (e.g., a video encoding device) may determine to use a quantization states transition table for TCQ including multiple quantization states. The device may determine that the state transition table includes more than eight quantization states. The device may determine that the state transition table comprises sixteen quantization states. The device may select a quantization state from the multiple quantization states. The device may determine, based on the selected quantization state, a dequantization index based on a parity associated with the selected quantization state. The determined dequantization index may be associated with a dequantization state table (e.g., a dequantization list) including multiple dequantization states. There may be more quantization states than dequantization states. The device may perform quantization based on the selected quantization state.

Multiple dequantization indices may be associated with the multiple quantization states. The device may assign multiple dequantization indices to the multiple quantization states. The device may determine the dequantization index from the multiple dequantization indices based on the selected quantization state. The device may include the dequantization index (e.g., an indication of the dequantization index) in video data.

Odd indices from the multiple dequantization indices may be associated with a first scalar quantizer (e.g., Q0). Even indices from the multiple dequantization indices may be associated with a second scalar quantizer (e.g., Q1). The device may determine that a first set of the multiple quantization states include dummy states (e.g., the last eight states of a dequantization table). The device may determine that the dummy states are associated with a second set (e.g., the first eight states of the dequantization table) of the multiple quantization states based on the first scalar quantizer and the second scalar quantizer.

If there seems to be a mismatch between encoder and decoder, the parity of the states (e.g., used SQ quantizer either Q0 or Q1) by following a 16-state transition table or 8-state transition table may be the same. If the state I0 has a mismatch (e.g., state in encoder and in decoder are different), the selected SQ (e.g., either Q0 or Q1) may be the same. Since used SQs are the same, dequantization may be the same. The device may determine to use the state transition table for TCQ at one or more of a block level, slice level, or picture level.

On the encoder side, when pqData[0] and pqData[2] are even and odd indices (e.g., quantization/dequantization indices) of a Q0 quantizer, and pqData[3] and pqData[1] are even and odd indices of a Q1 quantizer, an example state transition and example state exchange may be implemented as follows:

```
#if IDCC_16STATES
    m_prevStates[0].checkRdCosts( spt, pqData[0], pqData[2], decisions[0], decisions[2]);
    m_prevStates[1].checkRdCosts( spt, pqData[3], pqData[1], decisions[5], decisions[7]);
    m_prevStates[2].checkRdCosts( spt, pqData[0], pqData[2], decisions[1], decisions[3]);
    m_prevStates[3].checkRdCosts( spt, pqData[3], pqData[1], decisions[6], decisions[4]);
    m_prevStates[4].checkRdCosts( spt, pqData[0], pqData[2], decisions[8+2], decisions[8+0]);
    m_prevStates[5].checkRdCosts( spt, pqData[3], pqData[1], decisions[8+4], decisions[8+6]);
    m_prevStates[6].checkRdCosts( spt, pqData[0], pqData[2], decisions[8+3], decisions[8+1]);
    m_prevStates[7].checkRdCosts( spt, pqData[3], pqData[1], decisions[8+7], decisions[8+5]);
    m_prevStates[8+0].checkRdCosts( spt, pqData[0], pqData[2], decisions[8+0], decisions[8+2]);
    m_prevStates[8+1].checkRdCosts( spt, pqData[3], pqData[1], decisions[8+5], decisions[8+7]);
    m_prevStates[8+2].checkRdCosts( spt, pqData[0], pqData[2], decisions[8+1], decisions[8+3]);
    m_prevStates[8+3].checkRdCosts( spt, pqData[3], pqData[1], decisions[8+6], decisions[8+4]);
    m_prevStates[8+4].checkRdCosts( spt, pqData[0], pqData[2], decisions[2], decisions[0]);
    m_prevStates[8+5].checkRdCosts( spt, pqData[3], pqData[1], decisions[4], decisions[6]);
    m_prevStates[8+6].checkRdCosts( spt, pqData[0], pqData[2], decisions[3], decisions[1]);
    m_prevStates[8+7].checkRdCosts( spt, pqData[3], pqData[1], decisions[7], decisions[5]);
for (int i=0;i<8;i++)
{
    if (decisions[i+8]. rdCost<decisions[i]. rdCost)
```

```
std::swap(decisions[i+8],decisions[i]); }
#endif
```

The device may determine multiple rate distortion costs of the multiple quantization states. The device may select the quantization state from the multiple quantization states based on the multiple rate distortion costs.

The decoder may not follow a 16-state transition table. An 8-state transition table may match the used SQ in a 16-state transition table.

The decoder may decode the states where *stateTransTab* is the 8-states transition table.

$$s\_(n+1) \ = (stateTransTab \gg (s\_n \ll 3 + (q\_n \ \& \ 1) \ll 2)) \ \& \ 15$$

Using an increased (e.g., enhanced) number of states in TCQ may be associated with using (e.g., extra) updates of a state, which may increase encoder complexity. For example, a 16-states TCQ with a transition table given in Table 5, may have double quantization complexity than (e.g., default) 8 states. A 16-state TCQ may be associated with around 15% extra complexity compared to 8-states in an example encoding process. In examples, extra states (e.g., 8 dummy states) may be depicted as a (e.g., one) state. For example, a 9 states TCQ may include 8 original states and an (e.g., one) extra dummy state. Table 6 depicts an example state-transition table and includes 9-state transitions for quantizer selection. For example, the first 8 states (0-7) may be original states, and the last state (e.g., 8th) may be the dummy state.

Table 6

| state $s_n$ | quantizer used | next state $s_{n+1}$ | |
| | | $p_n = 0$ | $p_n = 1$ |
|---|---|---|---|
| 0 | $Q_0$ | 0 | 2 |
| 1 | $Q_1$ | 5 | 7 |
| 2 | $Q_0$ | 1 | 3 |
| 3 | $Q_1$ | 6 | 4 |
| 4 | $Q_0$ | 10 | 8 |
| 5 | $Q_1$ | 12 | 14 |
| 6 | $Q_0$ | 11 | 9 |
| 7 | $Q_1$ | 15 | 13 |
| 8 | $Q_{bd}$ | $E_{bd}$ | $O_{bd}$ |

The first 8 lines in the table may be the same as the first half of the 16-state transitions table in Table 5. In the last state of Table 6, the quantization to be used ($Q_{bd}$) may be either Q0 or Q1 according to a dummy state (e.g., the best dummy state). The best dummy state may be determined based on one or more of (e.g., all) dummy states corresponding to the original states. For example, a transition to the 8th state may depend on the best dummy state transition. If the parity is even, the 8th state may be the state where the best dummy state is associated with even parity ($E_{bd}$), and if the parity is odd, the 8th state may be the state where the best dummy state is associated with odd parity ($O_{bd}$). An initial value may be assigned for the best dummy state and, and the dummy state may be updated for a coefficient (e.g., based on a coefficient). The selected quantization state (e.g., for the 8th state) may be used for determining the dummy state. The pseudo-code may be as follows.

```
#if IDCC_9STATES

    m_prevStates[0].checkRdCosts( spt, pqData[0], pqData[2], decisions[0], decisions[2]);

    m_prevStates[1].checkRdCosts( spt, pqData[3], pqData[1], decisions[5], decisions[7]);

    m_prevStates[2].checkRdCosts( spt, pqData[0], pqData[2], decisions[1], decisions[3]);

    m_prevStates[3].checkRdCosts( spt, pqData[3], pqData[1], decisions[6], decisions[4]);

    m_prevStates[4].checkRdCosts( spt, pqData[0], pqData[2], decisions[10], decisions[8]);

    m_prevStates[5].checkRdCosts( spt, pqData[3], pqData[1], decisions[12], decisions[14]);
```

```
m_prevStates[6].checkRdCosts( spt, pqData[0], pqData[2], decisions[11], decisions[9]);

m_prevStates[7].checkRdCosts( spt, pqData[3], pqData[1], decisions[15], decisions[13]);

switch(bd)

{

    Case 8:

        m_prevStates[8].checkRdCosts( spt, pqData[0], pqData[2], decisions[8], decisions[10]);

    Case 9:

        m_prevStates[9].checkRdCosts( spt, pqData[3], pqData[1], decisions[13], decisions[15]);

    Case 10:

        m_prevStates[10].checkRdCosts( spt, pqData[0], pqData[2], decisions[9], decisions[11]);

    Case 11:

        m_prevStates[11].checkRdCosts( spt, pqData[3], pqData[1], decisions[14], decisions[12]);

    Case 12:

        m_prevStates[12].checkRdCosts( spt, pqData[0], pqData[2], decisions[2], decisions[0]);

    Case 13:

        m_prevStates[13].checkRdCosts( spt, pqData[3], pqData[1], decisions[4], decisions[6]);

    Case 14:

        m_prevStates[15].checkRdCosts( spt, pqData[0], pqData[2], decisions[3], decisions[1]);

    Case 15:

        m_prevStates[15].checkRdCosts( spt, pqData[3], pqData[1], decisions[7], decisions[5]);

}

for (int i=0;i<8;i++)

{

    if (decisions[i+8].rdCost<decisions[i].rdCost)

        std::swap(decisions[i+8],decisions[i]);

}
```

```
// find the best dummy state

int bd=8;

for (int i=9;i<16;i++)

{

        if (decisions[i].rdCost<decisions[bd].rdCost)

            bd=i;

}
```

In association with 16-state TCQ, if the coefficient to be quantized is almost the same distance to the two-quantization result (e.g., see Table 5, almost the same distance through to the consecutive codebook center), an 8-state TCQ may remove the secondary result and continue quantization for a first quantization result (e.g., the best one). A second quantization result (e.g., the second-best quantization result) may be better for the next coefficient if it (e.g., the second-best quantization result) was not removed (e.g., from the TCQ). In examples, a 16-state TCQ may keep the second-best results to the dummy states for the next round of quantization.

To get the advantage of enhanced states TCQ with a lower encoder complexity, a (e.g., default) 8-states may be switched between additional (e.g., enhanced) states according to distance of the coefficient to the consecutive quantization center. The pseudo-code may be seen as follows.

If $|d_1 - d_2| < Th$

  Apply 16 state DQ with state exchanging.

Else

  Apply default DQ.

Endif

d1 and d2 are the distance of the coefficient to the nearest two quantization centers, and Th is a certain threshold to control switching.

Systems, methods, and instrumentalities may be configured for states dependent quantization. A video encoding device may determine to use a quantization state transition table for trellis coded quantization (TCQ) including a multiple quantization states. The state transition table includes more than eight quantization states. The number of quantization states may be greater than the number dequantization states (e.g., the number of dequantization states available at a decoding device). The device may select a quantization state from the multiple quantization states. The device may determine, based on the selected quantization state, a dequantization index based on a parity associated with the selected quantization state. The determined dequantization index may be associated with a dequantization state list that may include multiple dequantization states. There may be more quantization states than dequantization states. The device may perform quantization based on the selected quantization state.

For example, the device may determine to use a state transition table includes sixteen quantization states. The device may assign dequantization indices to corresponding quantization state(s). The device may determine the dequantization index from the multiple dequantization indices based on the selected quantization state. The device may include the dequantization index in video data.

For example, odd indices from the multiple dequantization indices may be associated with a first scalar quantizer. Even indices from the multiple dequantization indices may be associated with a second scalar quantizer. The first set of the multiple quantization states may include dummy states. The device may associate the dummy states with a second set of quantization states based on the first scalar quantizer and the second scalar quantizer.

For example, the device may be configured with multiple state transition tables having different numbers of quantization states. The device may select a state transition table for TCQ at one or more of a block level, slice level, or picture level. The device may calculate rate distortion costs that correspond to the quantization states. The device may select the quantization state from the multiple quantization states based on their corresponding rate distortion costs.

Systems, methods, and instrumentalities may be provided for enhanced states dependent quantization. A device (e.g., a video encoding and/or decoding device) may configure a state transition table for dependent quantization to comprise more than eight states; and select the number of states based on a block characteristic.

The block characteristic may include one or more of a block size, prediction mode, color component, or quantization parameter. The block characteristic may include a block size. The device may determine a block size based on one or more of a width or height of a current block. The device may select the number of states based on the block size. The block characteristic may include a prediction mode. The device may determine whether the prediction mode is intra-predicted or inter-predicted. The device may select the number of states based on the determination. The block characteristic may include a transform coefficient index. The device may determine whether the transform coefficient index is equal to or higher than a threshold. The device may select the number of states based on the determination. The block characteristics may include a color component. The device may determine that the color component comprises a luma component. The device may select the number of states based on the determination.

Systems, methods, and instrumentalities may be provided for enhanced states dependent quantization. In examples, a device (e.g., a video encoding device) may determine to use a quantization state transition table for trellis coded quantization (TCQ) comprising a plurality of quantization states and a dummy state. The device may determine that the quantization state transition table comprises more than eight states. The device may select a quantization state from the plurality of quantization states. The device may determine, based on the selected quantization state, a dequantization index based on a parity associated with the selected quantization state. The dummy state may be associated with the selected quantization state. The device may perform quantization based on the selected quantization state.

The device may determine that the state transition table includes nine states. The nine states may include eight quantization states and the dummy state.

Multiple dequantization indices may be associated with the multiple quantization states. The device may determine the quantization index from the multiple quantization indices based on the selected quantization state. The device may include an indication of the quantization index in video data.

Odd indices from the multiple quantization indices may be associated with a first scalar quantizer. Even indices from the multiple quantization indices may be associated with a second scalar quantizer. The device may determine that the dummy state is associated with the first scalar quantizer or the second scalar quantizer.

The device may determine to use the state transition table for TCQ at one or more of a block level, slice level, or picture level. The device may determine a plurality of rate distortion costs of the multiple quantization states. The device may select the quantization state from the plurality of quantization states based on the plurality of rate distortion costs.

Although features and elements are described above in particular combinations, one of ordinary skill in the art will appreciate that each feature or element can be used alone or in any combination with the other features and elements. In addition, the methods described herein can be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software can be used to implement a radio frequency transceiver for use in a WTRU, UE, terminal, base station, RNC, or any host computer.

**Claims**

1. A video encoding device comprising:
   a processor configured to:

   determine to use a quantization state transition table for trellis coded quantization (TCQ) comprising a plurality of quantization states and a dummy state;
   determine that the quantization state transition table comprises more than eight states;
   select a quantization state from the plurality of quantization states;
   determine, based on the selected quantization state, a dequantization index based on a parity associated with the selected quantization state, and wherein the dummy state is associated with the selected quantization state; and
   perform quantization based on the selected quantization state.

2. The video encoding device of claim 1, wherein the processor is further configured to:
determine that the state transition table comprises nine states, wherein the nine states comprise eight quantization states and the dummy state.

3. The video encoding device of any of claims 1 or 2, wherein a plurality of dequantization indices are associated with the plurality of quantization states, and the processor is further configured to:

determine the dequantization index from the plurality of dequantization indices based on the selected quantization state; and
include an indication of the dequantization index in video data.

4. The video encoding device of claim 3, wherein odd indices from the plurality of dequantization indices are associated with a first scalar quantizer, and wherein even indices from the plurality of dequantization indices are associated with a second scalar quantizer, and wherein the processor is further configured to:
determine that the dummy state is associated with the first scalar quantizer or the second scalar quantizer.

5. The video encoding device of any of claims 1 - 4, wherein the processor is further configured to:
determine to use the state transition table for TCQ at one or more of a block level, slice level, or picture level.

6. The video encoding device of any of claims 1 - 5, wherein the processor is further configured to:

determine a plurality of rate distortion costs of the plurality of quantization states; and
select the quantization state from the plurality of quantization states based on the plurality of rate distortion costs.

7. A method for video encoding, the method comprising:

determining to use a quantization state transition table for trellis coded quantization (TCQ) comprising a plurality of quantization states and a dummy state;
determining that the quantization state transition table comprises more than eight quantization states;
selecting a quantization state from the plurality of quantization states;
determining, based on the selected quantization state, a dequantization index based on a parity associated with the selected quantization state, and wherein the dummy state is associated with the selected quantization state; and
performing quantization based on the selected quantization state.

8. The method of claim 7, wherein the method further comprises:
determining that the state transition table comprises nine states, wherein the nine states comprise eight quantization states and the dummy state.

9. The method of any of claims 7 or 8, wherein a plurality of dequantization indices are associated with the plurality of quantization states, and wherein the method further comprises:

determining the dequantization index from the plurality of dequantization indices based on the selected quantization state; and
including an indication of the dequantization index in video data.

10. The method of claim 9, wherein odd indices from the plurality of dequantization indices are associated with a first scalar quantizer, and wherein even indices from the plurality of dequantization indices are associated with a second scalar quantizer, and wherein the method further comprises:
determining that the dummy state is associated with the first scalar quantizer or the second scalar quantizer.

11. The method of any of claims 7 - 10, wherein the method further comprises:
determining to use the state transition table for TCQ at one or more of a block level, slice level, or picture level.

12. The method of any of claims 7 - 11, wherein the method further comprises:

determining a plurality of rate distortion costs of the plurality of quantization states; and
selecting the quantization state from the plurality of quantization states based on the plurality of rate distortion costs.

**13.** A computer program product which is stored on a non-transitory computer readable medium and comprises program code instructions for implementing the steps of the method according to any of claims 7 through 12 when executed by a processor.

**14.** A computer program comprising program code instructions for implementing the steps of a method according to any of claims 7 through 12 when executed by a processor.

**FIG. 1A**

EP 4 668 741 A1

FIG. 1B

**FIG. 1C**

EP 4 668 741 A1

**FIG. 1D**

**200**

**FIG. 2**

**300**

FIG. 3

EP 4 668 741 A1

**FIG. 4**

EP 4 668 741 A1

**FIG. 5**

EP 4 668 741 A1

**FIG. 6**

EP 4 668 741 A1

scan index n →

start    0    1    2    3    N-3    N-2    N-1    end

s = 0 →

s = 1 →

s = 2 →

s = 3 →

path with minimum cost

FIG. 7

EP 4 668 741 A1

scan index n →

start   0   1   2   3   N-3   N-2   N-1   end

s = 0 →
s = 1 →
s = 2 →
s = 3 →
s = 4 →
s = 5 →
s = 6 →
s = 7 →

FIG. 8

EP 4 668 741 A1

800

Identify nb of
coefficients (N)

801

Is N <= T ?

yes          no

802

Use S1 states (S=S1)

803

Use S2 states (S=S2)

804

Invsere quantization
using S states

# FIG. 9

Europäisches
Patentamt

European
Patent Office

Office européen
des brevets

## EUROPEAN SEARCH REPORT

**Application Number**

EP 24 30 5963

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SCHWARZ HEIKO ET AL: "Hybrid Video Coding with Trellis-Coded Quantization", 2019 DATA COMPRESSION CONFERENCE (DCC), IEEE, 26 March 2019 (2019-03-26), pages 182-191, XP033548461, DOI: 10.1109/DCC.2019.00026 [retrieved on 2019-05-10] * page 183 - page 189 * | 1-14 | INV. H04N19/124 H04N19/147 H04N19/176 |
| Y | SCHWARZ (FRAUNHOFER) H ET AL: "Additional support of dependent quantization with 8 states", 17. JVET MEETING; 20200107 - 20200117; BRUSSELS; (THE JOINT VIDEO EXPLORATION TEAM OF ISO/IEC JTC1/SC29/WG11 AND ITU-T SG.16 ), , no. JVET-Q0243 ; m51837 30 December 2019 (2019-12-30), XP030222966, Retrieved from the Internet: URL:http://phenix.int-evry.fr/jvet/doc_end _user/documents/17_Brussels/wg11/JVET-Q024 3-v2.zip JVET-Q0243-v2/JVET-Q0243-v2.docx [retrieved on 2019-12-30] * page 2 - page 4 * | 1-14 | |
| Y | WO 2023/132660 A1 (WILUS INST STANDARDS & TECH INC [KR]) 13 July 2023 (2023-07-13) * figures 8-12, 21-23 * * paragraph [0135] - paragraph [0203] * | 1-14 | |

TECHNICAL FIELDS
SEARCHED (IPC)

H04N

-/--

The present search report has been drawn up for all claims

| Place of search | Date of completion of the search | Examiner |
|---|---|---|
| Munich | 19 November 2024 | Kopilovic, Ivan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..................................................................................................

& : member of the same patent family, corresponding
    document

EPO FORM 1503 03.82 (P04C01)

**page 1 of 2**

Europäisches
Patentamt

European
Patent Office

Office européen
des brevets

**EUROPEAN SEARCH REPORT**

**Application Number**

EP 24 30 5963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BALCILAR (INTERDIGITAL) M ET AL: "EE2-4.3: 16 States TCQ with State Exchange", 34. JVET MEETING; 20240417 - 20240424; RENNES; (THE JOINT VIDEO EXPLORATION TEAM OF ISO/IEC JTC1/SC29/WG11 AND ITU-T SG.16), , no. JVET-AH0079 ; m67147 12 April 2024 (2024-04-12), XP030317323, Retrieved from the Internet: URL:https://jvet-experts.org/doc_end_user/documents/34_Rennes/wg11/JVET-AH0079-v2.zip JVET-AH0079_v2.docx [retrieved on 2024-04-12] * the whole document * ----- | 1-14 | |
| A | SCHWARZ HEIKO ET AL: "Quantization and Entropy Coding in the Versatile Video Coding (VVC) Standard", IEEE TRANSACTIONS ON CIRCUITS AND SYSTEMS FOR VIDEO TECHNOLOGY, IEEE, USA, vol. 31, no. 10, 9 April 2021 (2021-04-09), pages 3891-3906, XP011880907, ISSN: 1051-8215, DOI: 10.1109/TCSVT.2021.3072202 [retrieved on 2021-09-30] * section II. QUANTIZATION * ----- | 1-14 | TECHNICAL FIELDS SEARCHED (IPC) |
| A | WO 2023/117737 A1 (INTERDIGITAL VC HOLDINGS FRANCE SAS [FR]) 29 June 2023 (2023-06-29) * page 10, line 13 - page 28, line 22; figures 4-10 * ----- | 1-14 | |

The present search report has been drawn up for all claims

| Place of search | Date of completion of the search | Examiner |
|---|---|---|
| Munich | 19 November 2024 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                   

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5963

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | Publication date | Patent family member(s) | | Publication date |
|---|---|---|---|---|
| WO 2023132660 A1 | 13-07-2023 | KR | 20240132290 A | 03-09-2024 |
| | | WO | 2023132660 A1 | 13-07-2023 |
| WO 2023117737 A1 | 29-06-2023 | CN | 118414827 A | 30-07-2024 |
| | | EP | 4454270 A1 | 30-10-2024 |
| | | WO | 2023117737 A1 | 29-06-2023 |

For more details about this annex : see Official Journal of the European Patent Office, No. 12/82